(19) **Europäisches Patentamt European Patent Office Office européen des brevets**

(11) **EP 3 506 703 B1**

(12) **FASCICULE DE BREVET EUROPEEN**

(45) Date de publication et mention de la délivrance du brevet:
**15.07.2020 Bulletin 2020/29**

(51) Int Cl.:
***H04W 72/04*** *(2009.01)* ***H04W 84/18*** *(2009.01)*

(21) Numéro de dépôt: **18212861.1**

(22) Date de dépôt: **17.12.2018**

(54) **PROCÉDÉ D'ALLOCATION DE RESSOURCES RADIO DANS UN RÉSEAU SANS FIL, PAR APPRENTISSAGE**

ZUWEISUNGSVERFAHREN VON FUNKRESSOURCEN IN EINEM DRAHTLOSNETZWERK MITHILFE EINES LERNPROZESSES

METHOD FOR ALLOCATING RADIO RESOURCES IN A WIRELESS NETWORK, BY LEARNING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2017 FR 1701395**

(43) Date de publication de la demande:
**03.07.2019 Bulletin 2019/27**

(73) Titulaires:
- **Thales**
  **92400 Courbevoie (FR)**
- **CentraleSupélec**
  **91190 - Gif sur Yvette (FR)**

(72) Inventeurs:
- **GAVEAU, Jérôme**
  **92622 Gennevilliers cedex (FR)**
- **LE MARTRET, Christophe**
  **92622 Gennevilliers cedex (FR)**
- **ASSAAD, Mohamed**
  **91190 Gif-Sur-Yvette (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**EP-A1- 2 790 460**

- **ROSE LUCA ET AL: "Self-Organization in Decentralized Networks: A Trial and Error Learning Approach", IEEE TRANSACTIONS ON WIRELESS COMMUNICATIONS, IEEE SERVICE CENTER, PISCATAWAY, NJ, US, vol. 13, no. 1, 1 janvier 2014 (2014-01-01), pages 268-279, XP011538200, ISSN: 1536-1276, DOI: 10.1109/TWC.2013.112613.130405 [extrait le 2014-01-24]**
- **JÉRÔME GAVEAU ET AL: "Performance Analysis of Trial and Error Algorithms", ARXIV.ORG, CORNELL UNIVERSITY LIBRARY, 201 OLIN LIBRARY CORNELL UNIVERSITY ITHACA, NY 14853, 6 novembre 2017 (2017-11-06), XP080834607,**
- **ROSE LUCA ET AL: "Joint channel and power allocation in tactical cognitive networks: Enhanced trial and error", 2013 MILITARY COMMUNICATIONS AND INFORMATION SYSTEMS CONFERENCE, MILITARY UNIVERSITY OF TECHNOLOGY, 7 octobre 2013 (2013-10-07), pages 1-8, XP032547310,**

**Description**

L'invention concerne le domaine des réseaux de communication sans fil comprenant un ensemble de dispositifs communicants entre eux et étant organisés sous forme de groupes. L'invention porte sur un procédé d'allocation de ressources radio, en particulier des ressources radio sous forme de canaux logiques, dans un tel réseau. Autrement dit, l'invention concerne la gestion des attributions des ressources radio aux différents groupes du réseau, pour communiquer.

Par la suite l'expression « canal logique » désigne un ensemble de ressources fréquentielles et/ou temporelles allouées à un ou plusieurs terminaux pour communiquer. Un canal logique peut être défini par une loi de saut de fréquence au cours du temps. Par exemple, un canal logique est défini par un canal fréquentiel prédéterminé pour chaque intervalle temporel, au cours d'une séquence comprenant plusieurs intervalles temporels.

Dans un réseau sans fil composé de dispositifs communicants entre eux, les communications utilisent des ressources radio, par exemple des ressources fréquentielles ou temporelles ou encore des ressources de niveau de puissance des signaux émis pour communiquer.

Par exemple, dans un réseau organisé en groupes de dispositifs, chaque groupe utilise un ensemble de ressources radio, par exemple des canaux logiques, pour communiquer.

Si deux groupes utilisent les mêmes canaux logiques pour communiquer, ils peuvent se brouiller mutuellement ou interférer entre eux selon la distance qui les sépare. Il est donc nécessaire de prendre en compte les interférences mutuelles entre groupes pour allouer au mieux les ressources radio aux groupes du réseau avec un objectif global de maximiser le nombre de liens de communications qui fonctionnent avec un niveau de qualité de la liaison suffisant pour mettre en œuvre les services rendus par le réseau.

Pour limiter l'influence des interférences entre groupes d'un même réseau, une solution existante consiste à attribuer des canaux fréquentiels orthogonaux aux différents groupes du réseau. Cette solution est cependant limitée compte tenu du fait que la ressource spectrale disponible est elle même le plus souvent limitée.

Une autre solution consiste à effectuer une réutilisation spatiale des canaux en attribuant les mêmes canaux à des groupes suffisamment éloignés, pour peu que l'on sache à l'avance les positions des groupes, y compris dans le cas de réseaux mobiles. Cette allocation est alors statique et vaut pour toute la durée de la mission. Cette solution présente les limites de l'allocation statique à des objets dynamiques. Si des groupes se rapprochent en cours de mission, ils sont susceptibles de se brouiller mutuellement.

Il est donc nécessaire de recourir à des solutions dynamiques qui permettent de réaliser au cours du temps la meilleure allocation possible des canaux. Cette solution doit aussi être distribuée aux groupes car il est difficile d'imaginer centraliser le calcul de cette répartition pour des raisons de latence, de point de vulnérabilité et de surcharge des signaux de signalisations.

On connait par ailleurs, une méthode d'allocation de ressources basée sur un algorithme mathématique d'essai-erreur appelé « trial and error learning » (TEL). Cette méthode est décrite dans la publication scientifique [1].

Cette méthode possède de bonnes propriétés de convergence tout en étant mise en œuvre de façon décentralisée au sein de chaque groupe du réseau. Chaque prise de décision d'un groupe est basée sur un diagramme d'état qui nécessite uniquement des informations locales dont une métrique de qualité perçue du fonctionnement des liens de communication au sein du groupe. Les conditions de convergence de cet algorithme requièrent cependant que la métrique de qualité perçue par un groupe soit une valeur déterministe. C'est-à-dire que, pour chaque configuration du réseau, il existe une seule et unique valeur de qualité par groupe. Cependant, les canaux de communications sont soumis à divers phénomènes aléatoires (évanouissements, bruit de mesure, ...) qui introduisent des variations de la valeur de qualité perçue autour de sa valeur déterministe. Sous ces conditions, la méthode proposée dans [1] ne converge plus vers un point de fonctionnement satisfaisant et les performances du réseau sont dégradées.

Un problème que vise à résoudre l'invention est donc d'améliorer la méthode proposée dans [1] afin de retrouver une convergence et des performances satisfaisantes lorsque la métrique de qualité perçue est perturbée par des phénomènes aléatoires.

Un autre problème à résoudre est de généraliser la méthode à d'autres algorithmes d'essai-erreur par exemple celui décrit dans les publications scientifiques [2] et [3].

L'invention permet de résoudre les limitations des solutions de l'art antérieur en proposant un procédé d'allocation de ressources radio basé sur une méthode essai-erreur mettant en œuvre un diagramme d'états, tel que décrit notamment dans les références [1], [2] et [3]. L'invention consiste notamment en l'introduction d'un intervalle de tolérance dont les bornes sont mises à jour de façon automatisée afin de prendre en compte l'influence non déterministe des perturbations des canaux de propagation dans un réseau sans fil. L'intervalle de tolérance est pris en compte lors des décisions effectuées dans les transitions du diagramme d'état. Ces transitions dépendent de la valeur courante de la métrique de qualité mesurée qui correspond à l'état global des liens de communication dans un groupe du réseau.

L'invention a pour objet un procédé d'allocation de ressources radio au sein d'un réseau de dispositifs communicants organisés en groupes, le procédé comprenant les étapes suivantes exécutées itérativement par au moins un dispositif communiquant de chaque groupe:

- Sélectionner une nouvelle configuration d'allocation de ressources radio a' à appliquer aux dispositifs du groupe, avec une probabilité de sélection donnée, ou appliquer une configuration d'allocation de référence $\bar{a}$, avec une probabilité complémentaire à ladite probabilité de sélection,
- Mesurer une métrique u' de qualité globale des liens de communication entre dispositifs du groupe,
- Comparer la métrique de qualité mesurée u' avec une métrique de qualité de référence $\bar{u}$, la comparaison incluant la prise en compte d'un intervalle de tolérance $[\bar{u} - \delta_-, \bar{u} + \delta_+]$ autour de la métrique de qualité de référence, l'intervalle de tolérance étant défini par un seuil de tolérance bas $\delta_-$ et un seuil de tolérance haut $\delta_+$,
- En fonction de ladite comparaison, effectuer, au sein d'un diagramme d'états ayant un nombre d'états prédéterminé, une transition depuis un état de départ vers un état d'arrivée,
- En fonction de l'état d'arrivée, mettre à jour ou non la métrique de qualité de référence $\bar{u}$ avec la métrique de qualité mesurée u' et/ou mettre à jour ou non la configuration d'allocation de référence $\bar{a}$ avec la nouvelle configuration d'allocation a',
- En fonction de ladite transition et de ladite comparaison, mettre à jour une mémoire contenant au moins une métrique de qualité mesurée de manière à ce que les valeurs contenues dans la mémoire soient stationnaires,
- Déterminer une borne inférieure et une borne supérieure de la distribution des métriques de qualité de sorte qu'un pourcentage donné de valeurs sont comprises entre la borne inférieure et la borne supérieure,
- Déterminer le seuil de tolérance haut $\delta_+$ à partir de la borne supérieure et le seuil de tolérance bas $\delta_-$ à partir de la borne inférieure.

Selon un aspect particulier de l'invention, la mise à jour de la mémoire comprend les étapes suivantes :

- Si une nouvelle configuration d'allocation de ressources radio est sélectionnée,

    • Si la métrique de qualité de référence est mise à jour, réinitialiser la mémoire avec la métrique de qualité mesurée,
    • Sinon, ne pas mettre à jour la mémoire,

- Si la configuration d'allocation de référence est appliquée,

    • Si la métrique de qualité mesurée est comprise dans l'intervalle de tolérance, ajouter la métrique de qualité mesurée à la mémoire,
    • Sinon,

        ▪ Si la métrique de qualité de référence est mise à jour, réinitialiser la mémoire avec la métrique de qualité mesurée,
        ▪ Sinon, ne pas mettre à jour la mémoire.

Selon un mode de réalisation particulier de l'invention, la métrique de qualité u' d'un groupe est égale au rapport entre un nombre de liens de communication en état de fonctionner dans le groupe et le nombre de liens de communication total dans le groupe.

Selon un mode de réalisation particulier de l'invention, les ressources radio sont des ressources fréquentielles.

Selon un mode de réalisation particulier de l'invention, le diagramme d'états comprend un état satisfaisant et un état non satisfaisant.

Selon un mode de réalisation particulier de l'invention, lorsque l'état de départ est l'état satisfaisant et qu'une nouvelle configuration d'allocation de ressources radio a' est sélectionnée :

- on effectue une transition vers l'état satisfaisant avec une probabilité de transition dépendante de la métrique de qualité mesurée u' et on met à jour la métrique de qualité de référence $\bar{u}$ avec la métrique de qualité mesurée u' et on met à jour la configuration d'allocation de référence $\bar{a}$ avec la nouvelle configuration d'allocation a',
- on effectue une transition vers l'état non satisfaisant avec une probabilité complémentaire à ladite probabilité de transition.

Selon un mode de réalisation particulier de l'invention, lorsque l'état de départ est l'état satisfaisant et qu'on applique au groupe la configuration d'allocation de ressources radio de référence $\bar{a}$ :

- Si la métrique de qualité mesurée u' est comprise dans l'intervalle de tolérance $[\bar{u} - \delta_-, \bar{u} + \delta_+]$ autour de la métrique de qualité de référence $\bar{u}$, on effectue une transition vers l'état satisfaisant,

- Si la métrique de qualité mesurée u' n'est pas comprise dans l'intervalle de tolérance [$\bar{u}$ - $\delta_-$, $\bar{u}$ + $\delta_+$] :

  • on effectue une transition vers l'état satisfaisant avec une probabilité de transition dépendante de la métrique de qualité mesurée u' et on met à jour la métrique de qualité de référence $\bar{u}$ avec la métrique de qualité mesurée u',
  • on effectue une transition vers l'état non satisfaisant avec une probabilité complémentaire à ladite probabilité de transition.

Selon un mode de réalisation particulier de l'invention, lorsque l'état de départ est l'état non satisfaisant, on sélectionne une nouvelle configuration d'allocation de ressources radio a' et :

- on effectue une transition vers l'état satisfaisant avec une probabilité de transition dépendante de la métrique de qualité mesurée u' et on met à jour la métrique de qualité de référence $\bar{u}$ avec la métrique de qualité mesurée u' et on met à jour la configuration d'allocation de référence $\bar{a}$ avec la nouvelle configuration d'allocation a',
- on effectue une transition vers l'état non satisfaisant avec une probabilité complémentaire à ladite probabilité de transition.

Selon un mode de réalisation particulier de l'invention, le diagramme d'états comprend en outre au moins un premier état de transition et un second état de transition.

Selon un mode de réalisation particulier de l'invention, lorsque l'état de départ est l'état satisfaisant et qu'une nouvelle configuration d'allocation de ressources radio a' est sélectionnée :

- Si la métrique de qualité mesurée u' est inférieure ou égale à la somme de la métrique de qualité de référence $\bar{u}$ et du seuil de tolérance haut $\delta_+$, on effectue une transition vers l'état satisfaisant sans mettre à jour ni la métrique de qualité de référence $\bar{u}$ ni la configuration d'allocation de référence $\bar{a}$,
- Si la métrique de qualité mesurée u' est supérieure à la somme de la métrique de qualité de référence $\bar{u}$ et du seuil de tolérance haut $\delta_+$ :

  • on effectue une transition vers l'état satisfaisant avec une probabilité de transition donnée et on met à jour la métrique de qualité de référence $\bar{u}$ avec la métrique de qualité mesurée u' et on met à jour la configuration d'allocation de référence $\bar{a}$ avec la nouvelle configuration d'allocation a',
  • on effectue une transition vers l'état satisfaisant avec une probabilité complémentaire à ladite probabilité de transition sans mettre à jour ni la métrique de qualité de référence $\bar{u}$ ni la configuration d'allocation de référence $\bar{a}$.

Selon un mode de réalisation particulier de l'invention, lorsque l'état de départ est l'état satisfaisant et qu'on applique au groupe la configuration d'allocation de ressources radio de référence $\bar{a}$:

- Si la métrique de qualité mesurée u' est comprise dans l'intervalle de tolérance [$\bar{u}$ - $\delta_-$, $\bar{u}$ + $\delta_+$] autour de la métrique de qualité de référence $\bar{u}$, on effectue une transition vers l'état satisfaisant sans mettre à jour la métrique de qualité de référence $\bar{u}$,
- Si la métrique de qualité mesurée u' est supérieure à la somme de la métrique de qualité de référence $\bar{u}$ et du seuil de tolérance haut $\delta_+$, on effectue une transition vers le premier état de transition sans mettre à jour la métrique de qualité de référence $\bar{u}$,
- Si la métrique de qualité mesurée u' est inférieure à la différence entre la métrique de qualité de référence $\bar{u}$ et le seuil de tolérance bas $\delta_-$, on effectue une transition vers le second état de transition sans mettre à jour la métrique de qualité de référence $\bar{u}$.

Selon un mode de réalisation particulier de l'invention, lorsque l'état de départ est le premier état de transition, on applique la configuration d'allocation de ressources radio de référence $\bar{a}$ et :

- Si la métrique de qualité mesurée u' est comprise dans l'intervalle de tolérance [$\bar{u}$ - $\delta_-$, $\bar{u}$ + $\delta_+$] autour de la métrique de qualité de référence $\bar{u}$, on effectue une transition vers l'état satisfaisant sans mettre à jour la métrique de qualité de référence $\bar{u}$,
- Si la métrique de qualité mesurée u' est supérieure à la somme de la métrique de qualité de référence $\bar{u}$ et du seuil de tolérance haut $\delta_+$, on effectue une transition vers l'état satisfaisant et on met à jour la métrique de qualité de référence $\bar{u}$ avec la métrique de qualité mesurée u',

4

- Si la métrique de qualité mesurée u' est inférieure à la différence entre la métrique de qualité de référence $\overline{u}$ et le seuil de tolérance bas $\delta_-$, on effectue une transition vers le second état de transition sans mettre à jour la métrique de qualité de référence $\overline{u}$.

Selon un mode de réalisation particulier de l'invention, lorsque l'état de départ est le second état de transition, on applique la configuration d'allocation de ressources radio de référence $\overline{a}$ et :

- Si la métrique de qualité mesurée u' est comprise dans l'intervalle de tolérance $[\overline{u} - \delta_-, \overline{u} + \delta_+]$ autour de la métrique de qualité de référence $\overline{u}$, on effectue une transition vers l'état satisfaisant sans mettre à jour la métrique de qualité de référence $\overline{u}$,
- Si la métrique de qualité mesurée u' est supérieure à la somme de la métrique de qualité de référence $\overline{u}$ et du seuil de tolérance haut $\delta_+$, on effectue une transition vers le premier état de transition sans mettre à jour la métrique de qualité de référence $\overline{u}$,
- Si la métrique de qualité mesurée u' est inférieure à la différence entre la métrique de qualité de référence $\overline{u}$ et le seuil de tolérance bas $\delta_-$, on effectue une transition vers l'état non satisfaisant sans mettre à jour la métrique de qualité de référence $\overline{u}$.

Selon un mode de réalisation particulier de l'invention, lorsque l'état de départ est l'état non satisfaisant, on sélectionne une nouvelle configuration d'allocation de ressources radio a' et :

- On effectue une transition vers l'état satisfaisant avec une probabilité de transition donnée et on met à jour la métrique de qualité de référence $\overline{u}$ avec la métrique de qualité mesurée u' et on met à jour la configuration d'allocation de référence $\overline{a}$ avec la nouvelle configuration d'allocation a',
- On effectue une transition vers l'état non satisfaisant avec une probabilité complémentaire à ladite probabilité de transition sans mettre à jour la métrique de qualité de référence $\overline{u}$ ni la configuration d'allocation de référence $\overline{a}$.

L'invention a aussi pour objet un programme d'ordinateur comportant des instructions pour l'exécution du procédé d'allocation de ressources radio selon l'invention, lorsque le programme est exécuté par un processeur.

L'invention a aussi pour objet un support d'enregistrement lisible par un processeur sur lequel est enregistré un programme comportant des instructions pour l'exécution du procédé d'allocation de ressources radio selon l'invention, lorsque le programme est exécuté par un processeur.

L'invention a aussi pour objet un dispositif communicant apte à communiquer avec une pluralité d'autres dispositifs communicants au sein d'un réseau organisé en groupes, le dispositif communiquant comprenant des moyens configurés pour mettre en œuvre le procédé d'allocation de ressources radio selon l'invention.

D'autres caractéristiques et avantages de la présente invention apparaîtront mieux à la lecture de la description qui suit en relation aux dessins annexés qui représentent :

- Les figures 1 à 4, quatre diagrammes illustrant la mise en œuvre d'une première méthode d'allocation de ressources radio par essai-erreur selon l'art antérieur,
- Les figures 5 et 6, deux diagrammes illustrant la mise en œuvre d'une seconde méthode d'allocation de ressources radio par essai-erreur selon l'art antérieur,
- Les figures 7 à 10, les quatre diagrammes des figures 1 à 4 adaptés pour mettre en œuvre la méthode d'allocation de ressources radio selon un premier mode de réalisation de l'invention,
- Les figures 11 et 12, les deux diagrammes des figures 5 et 6 adaptés pour mettre en œuvre la méthode d'allocation de ressources radio selon un second mode de réalisation de l'invention,
- La figure 13, un organigramme décrivant les principales étapes de mise en œuvre de la méthode d'allocation de ressources radio selon l'invention,
- La figure 14, un diagramme de transitions entre différents états d'une machine à états pour illustrer la première étape de mise en œuvre de la méthode d'allocation de ressources radio selon l'invention,
- La figure 15, un schéma illustrant un réseau sans fil organisé en groupes de dispositifs communicants, chaque groupe comprenant au moins un dispositif communicant configuré pour exécuter l'invention,
- La figure 16, un schéma illustrant un dispositif communicant configuré pour exécuter l'invention.

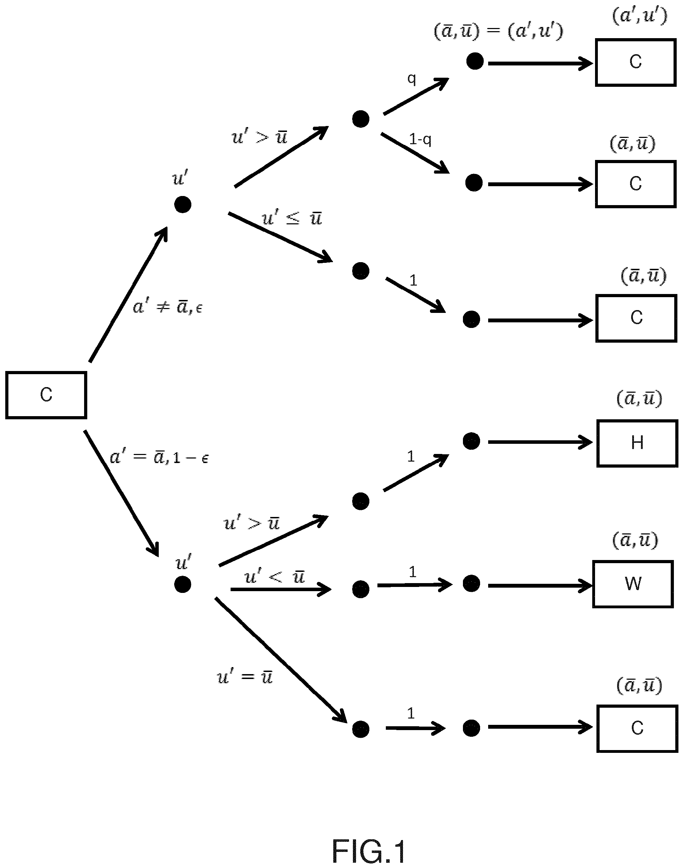

On décrit en premier lieu une première méthode d'allocation de ressources radio par essai-erreur selon l'art antérieur, à l'appui des figures 1 à 4. Cette première méthode correspond à celle décrite dans le document de référence [1] et est désignée par la suite méthode TEL de l'acronyme « Trial and Error Learning ». Le principe de cette méthode est le suivant. On considère un réseau de nœuds mobiles ou fixes aptes à communiquer entre eux par une liaison sans fil. Le réseau de nœuds est un réseau ad-hoc. Les nœuds sont organisés en groupes de nœuds. Dans chaque groupe, un nœud maitre est en charge d'exécuter la méthode d'allocation de ressources radio pour déterminer les ressources radio que doivent utiliser l'ensemble des nœuds du groupe pour communiquer à chaque instant. Les ressources radio peuvent être des ressources fréquentielles ou peuvent comprendre des ressources fréquentielles et temporelles ou encore des ressources en terme de niveau de puissance de signaux émis. Plus généralement, les modes de réalisation de l'invention sont décrits par la suite en considérant que les ressources radio sont des canaux logiques, comme défini en préambule de ce texte.

A chaque instant, le nœud maitre reçoit une information concernant l'état des liens de communication sans fil au sein du groupe. Cette information est, par exemple, reçue sous la forme d'une métrique de qualité globale de l'état des liens de communication. Par exemple, la métrique peut être égale au ratio du nombre de liens de communication en état de fonctionner sur le nombre de liens de communication total au sein du groupe.

Un lien de communication en état de fonctionner est un lien de communication dont le rapport signal à bruit et/ou le rapport signal à interférences est suffisamment élevé pour permettre une communication. De manière générale, le niveau de bruit et/ou interférences acceptable pour qu'un lien soit en état de fonctionner peut dépendre de la qualité de service visée et du type de service que l'on souhaite mettre en œuvre sur ce lien. A chaque instant, les liens de communication du réseau sont perturbés par le bruit mais aussi par les interférences générées par d'autres nœuds du réseau qui communiquent simultanément avec les mêmes ressources radio ou des ressources proches.

Un objectif de la méthode est de déterminer à chaque instant, la meilleure allocation de ressources radio pour chaque groupe pour maximiser le nombre de liens de communication en état de fonctionner dans l'ensemble du réseau. Autrement dit, la méthode vise à maximiser la somme des métriques de qualité sur l'ensemble des groupes que comprend le réseau.

A chaque instant, le nœud maitre exécute un ensemble d'actions qui dépendent de son état au sein d'un diagramme d'état spécifique à la méthode TEL. Selon cette méthode, le diagramme d'état comprend quatre états : un état dit satisfaisant C dans lequel le nœud se trouve lorsque la configuration d'allocation de ressources est satisfaisante, un état dit non satisfaisant D dans lequel le nœud se trouve lorsque la configuration d'allocation de ressources n'est pas satisfaisante et deux états de transition H et W entre l'état satisfaisant C et l'état non satisfaisant D. Le premier état de transition H est un état de transition dit « optimiste ». Le second état de transition W est un état de transition dit « vigilant ».

Sans perte de généralité, d'autres diagrammes d'états sont envisageables, notamment des diagrammes d'états qui ne comprennent que deux états C,D ou qui comprennent plus de deux états de transition.

Les figures 1 à 4 décrivent le diagramme d'état de la méthode TEL et les actions exécutées par le nœud maitre selon l'état de départ dans lequel il se trouve et selon la valeur de la métrique de qualité reçue.

Selon les notations utilisées dans les figures 1 à 4, la métrique de qualité mesurée à chaque nouvel instant est notée u', la métrique de qualité de référence stockée en mémoire par le nœud maitre est notée $\bar{u}$, la nouvelle configuration d'allocation de ressources appliquée au groupe est notée a', la configuration d'allocation de ressources de référence appliquée à l'instant précédent et stockée en mémoire par le nœud maitre est notée $\bar{a}$. Une configuration d'allocation de ressources correspond à un canal logique alloué au groupe pour communiquer. Les métriques de qualité ont une valeur croissante avec le niveau global de fonctionnement des liens de communication au sein d'un groupe. Autrement dit, plus la valeur de la métrique de qualité est faible, plus l'état des liens au sein du groupe est dégradé. Au contraire, plus la valeur de la métrique de qualité est élevée, plus l'état des liens au sein du groupe est satisfaisant. Avantageusement, la métrique de qualité peut être normée de sorte à être ramenée à une valeur comprise dans l'intervalle [0 ;1].

La figure 1 décrit les transitions possibles à partir de l'état satisfaisant C. A partir de l'état C, le nœud maitre va soit sélectionner aléatoirement une nouvelle configuration d'allocation de ressources a' différente de la configuration d'allocation de ressources de référence $\bar{a}$, avec une probabilité prédéterminée $\varepsilon$, soit conserver la configuration d'allocation de ressources de référence a' = $\bar{a}$ avec la probabilité complémentaire 1 - $\varepsilon$.

La probabilité $\varepsilon$ peut être constante ou variable pour réduire le temps de convergence. Avantageusement, la valeur de la probabilité $\varepsilon$ est prise dans l'intervalle [0 ;1] à une valeur proche de 0, par exemple $10^{-1}$, $10^{-2}$, $10^{-3}$. De préférence, la valeur de la probabilité $\varepsilon$ est prise à une valeur qui n'est pas trop proche de 1 pour ne pas rendre le système instable.

Dans le premier cas (a' ≠ $\bar{a}$), la nouvelle métrique de qualité mesurée u' est comparée à la métrique de qualité de référence.

Si u'>$\bar{u}$, le nœud maitre accepte la nouvelle configuration a' et la nouvelle métrique de qualité u' comme références avec une probabilité prédéterminée q. L'état final reste l'état satisfaisant C. Avec la probabilité complémentaire 1-q, la configuration de référence et la métrique de référence ne sont pas modifiées. La probabilité q est par exemple calculée via les relations suivantes: $q = \varepsilon^{G(u'-\bar{u})}$ avec $G(x) = -\gamma_1 x + \gamma_2$. Les constantes $\gamma_1$ et $\gamma_2$ sont choisies de sorte que pour toute valeur x appartenant à l'intervalle [0,1], $0 \le G(x) < \frac{1}{2}$. Si au contraire, u'≤$\bar{u}$, alors le nœud maitre reste toujours dans l'état satisfaisant C et ne modifie pas les valeurs de référence ($\bar{a},\bar{u}$).

Dans le second cas (a' = $\bar{a}$), la nouvelle métrique de qualité mesurée u' est aussi comparée à la métrique de qualité de référence.

Si u'>$\bar{u}$, le nœud maitre effectue une transition vers le premier état de transition H et ne modifie pas ses valeurs de référence ($\bar{a},\bar{u}$).

Si u'<$\bar{u}$, le nœud maitre effectue une transition vers le second état de transition W et ne modifie pas ses valeurs de référence ($\bar{a},\bar{u}$).

Si u'=$\bar{u}$, le nœud maitre reste dans l'état satisfaisant C et ne modifie pas ses valeurs de référence ($\bar{a},\bar{u}$).

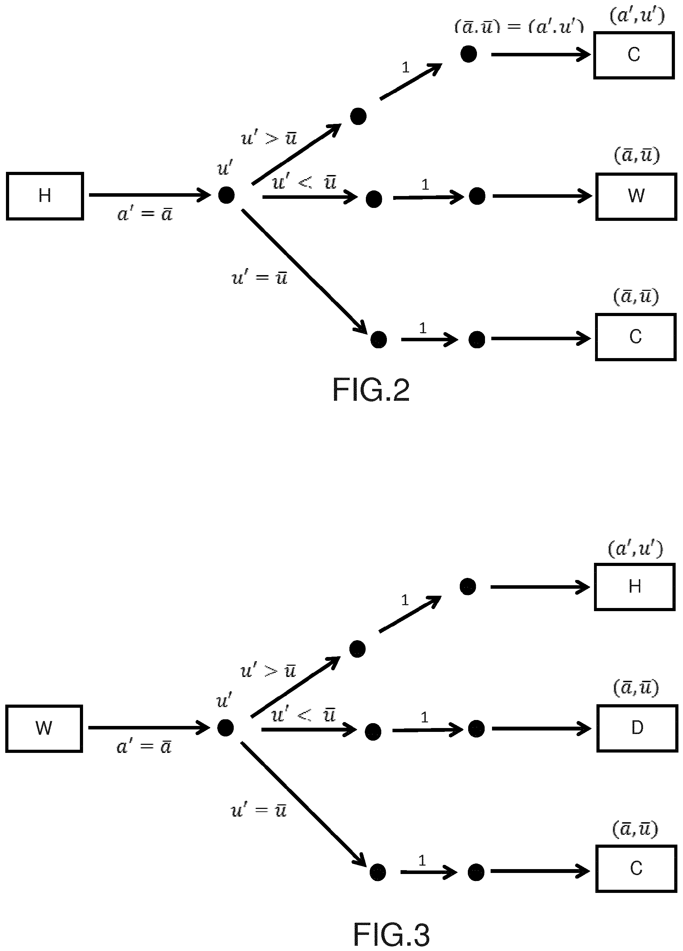

La figure 2 décrit les transitions possibles à partir du premier état de transition H dit « optimiste ». A partir de l'état H, le nœud maitre conserve la configuration d'allocation de référence a' = $\bar{a}$ et compare la nouvelle métrique de qualité u' mesurée à la métrique de qualité de référence.

Si u'>$\bar{u}$, le nœud maitre effectue une transition vers l'état satisfaisant C et modifie sa métrique de qualité de référence par la nouvelle métrique mesurée : $\bar{u}$ = u'.

Si u'<$\bar{u}$, le nœud maitre effectue une transition vers le second état de transition W et ne modifie pas ses valeurs de référence ($\bar{a},\bar{u}$).

Si u'= $\bar{u}$, le nœud maitre effectue une transition vers l'état satisfaisant C et ne modifie pas ses valeurs de référence ($\bar{a},\bar{u}$).

La figure 3 décrit les transitions possibles à partir du second état de transition W dit « vigilant ». A partir de l'état W, le nœud maitre conserve la configuration d'allocation de référence a' = $\bar{a}$ et compare la nouvelle métrique de qualité u' mesurée à la métrique de qualité de référence.

Si u'>$\bar{u}$, le nœud maitre effectue une transition vers le premier état de transition dit « optimiste » H.

Si u'< $\bar{u}$, le nœud maitre effectue une transition vers l'état non satisfaisant D.

Si u'= $\bar{u}$, le nœud maitre effectue une transition vers l'état satisfaisant C.

Les valeurs de référence ne sont jamais mises à jour en partant du second état de transition W.

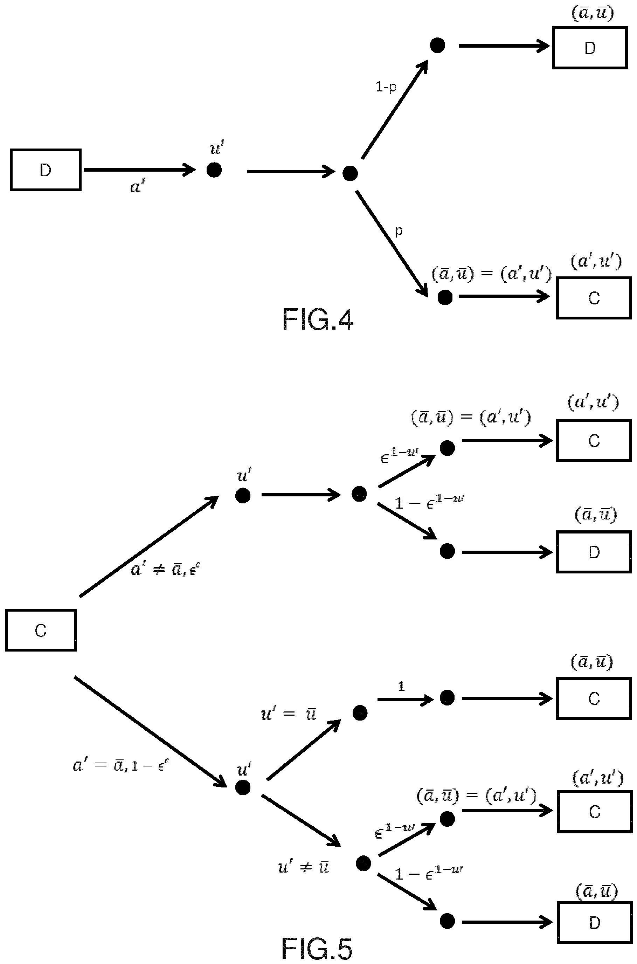

La figure 4 décrit les transitions possibles à partir de l'état non satisfaisant D. A partir de l'état D, le nœud maitre sélectionne une nouvelle configuration d'allocation a' aléatoirement parmi toutes les configurations possibles y compris la configuration de référence $\bar{a}$.

Le nœud maitre effectue une transition vers l'état satisfaisant C avec une probabilité prédéterminée p et reste dans l'état non satisfaisant D avec la probabilité complémentaire 1-p. Lors de la transition vers l'état satisfaisant C, les valeurs de référence sont mises à jour ($\bar{a}$, $\bar{u}$)= (a',u').

La probabilité p est par exemple définie par les relations suivantes : p = $\varepsilon^{F(u)}$ où F(x) = -$\phi_1$x + $\phi_2$, et les constantes

$\phi_1$ et $\phi_2$ sont choisies telles que pour toute valeur de x comprise dans l'intervalle [0,1], $0 \le F(x) < \frac{1}{2K}$. K est égal au nombre de groupes dans le réseau.

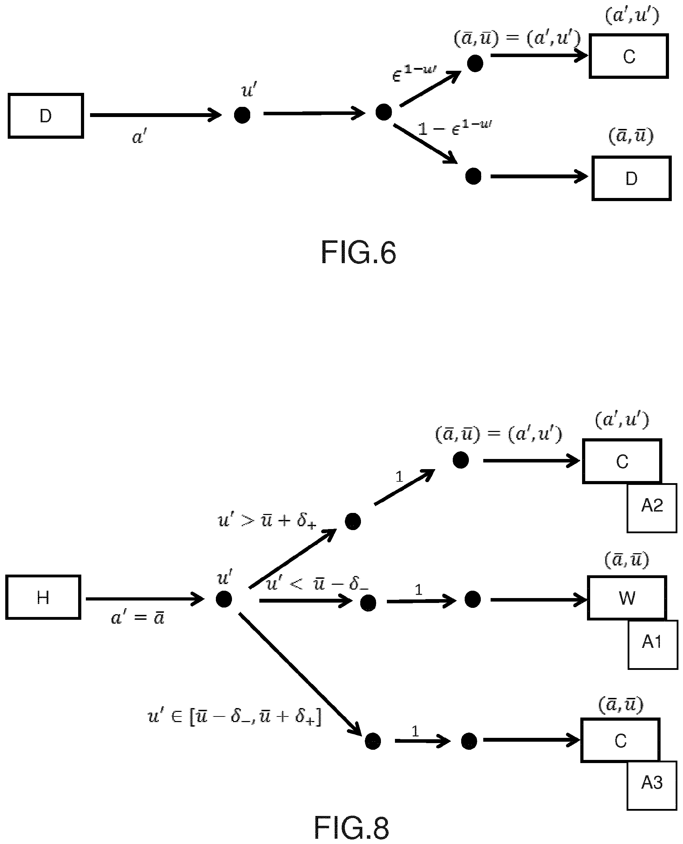

Les figures 5 et 6 illustrent les transitions dans un diagramme d'état comprenant deux états C et D, pour la mise en œuvre d'une seconde méthode d'allocation de ressources radio selon l'art antérieur. Cette seconde méthode est décrite dans les références [2] et [3].

Un point commun entre cette seconde méthode et la première méthode décrite à l'appui des figures 1 à 4 est l'utilisation d'un diagramme d'états pour modéliser les actions mises en œuvre par le nœud maitre d'un groupe à chaque fois qu'il reçoit une nouvelle métrique de qualité u'. Dans cette seconde méthode, le diagramme d'état comprend seulement deux états, un état satisfaisant C et un état non satisfaisant D.

La figure 5 décrit les transitions possibles en partant de l'état satisfaisant C.

A partir de l'état C, le nœud maitre va soit sélectionner aléatoirement une nouvelle configuration d'allocation de ressources a' ≠ $\bar{a}$ différente de la configuration d'allocation de ressources de référence $\bar{a}$, avec une probabilité prédéterminée $\varepsilon^c$, soit conserver la configuration d'allocation de ressources de référence a' = $\bar{a}$ avec la probabilité complémentaire 1 - $\varepsilon^c$. c est un entier strictement supérieur au nombre K de groupes dans le réseau.

Dans le premier cas (a' ≠ $\bar{a}$), le nœud maitre effectue une transition vers l'état non satisfaisant D avec une probabilité 1 - $\varepsilon^{1-u'}$. Avec la probabilité complémentaire $\varepsilon^{1-u'}$, le nœud maitre reste dans l'état satisfaisant C et met à jour la configuration d'allocation de référence et la métrique de référence ($\bar{a}$, $\bar{u}$)= (a',u').

Dans le second cas (a' = a), le nœud maitre compare la nouvelle métrique de qualité u' mesurée à la métrique de qualité de référence. Si les deux métriques sont égales entre elles, le nœud maitre reste dans l'état satisfaisant C. Si les deux métriques ont des valeurs différentes, le nœud maitre effectue une transition vers l'état non satisfaisant D avec une probabilité 1 - $\varepsilon^{1-u'}$. Avec la probabilité complémentaire $\varepsilon^{1-u'}$, le nœud maitre reste dans l'état satisfaisant C et met à jour la configuration d'allocation de référence et la métrique de référence ($\bar{a}$, $\bar{u}$) = (a',u').

La figure 6 décrit les transitions possibles à partir de l'état non satisfaisant D. A partir de l'état D, le nœud maitre sélectionne une nouvelle configuration d'allocation a' aléatoirement parmi toutes les configurations possibles y compris la configuration de référence $\bar{a}$.

Le nœud maitre effectue une transition vers l'état satisfaisant C avec une probabilité $\varepsilon^{1-u'}$ et reste dans l'état non satisfaisant D avec la probabilité complémentaire $1 - \varepsilon^{1-u'}$. Lors de la transition vers l'état satisfaisant C, les valeurs de référence sont mises à jour $(\bar{a}, \bar{u}) = (a', u')$.

Les deux méthodes d'allocation de ressources radio, par essai erreur, selon l'art antérieur, introduites ci-dessus présentent l'inconvénient commun de ne pouvoir fonctionner correctement que si la métrique de qualité est une valeur déterministe. Autrement dit, ces méthodes prennent comme hypothèse qu'en appliquant à deux instants différents la même configuration d'allocation de ressources à un groupe du réseau, la métrique de qualité mesurée sera identique aux deux instants différents.

Cependant, cette hypothèse est fausse dans un contexte réel d'un réseau de nœuds dans lequel les liens de communication sans fil sont soumis à des perturbations inhérentes aux canaux de transmission utilisés et qui sont variables dans le temps. En effet, les canaux de transmission sont soumis à divers phénomènes aléatoires tels que des évanouissements sélectifs ou non en fréquence, du bruit de mesure et d'autres formes de perturbations variables au cours du temps. Ces phénomènes introduisent des variations de la valeur de qualité perçue autour de sa valeur déterministe. Sous ces conditions, les méthodes décrites ci-dessus ne convergent plus vers un point de fonctionnement satisfaisant et les performances du réseau s'en trouvent dégradées.

L'invention vise à remédier à ces problèmes par l'introduction de seuils de tolérance lors des étapes de comparaison de la métrique de qualité mesurée u' avec la métrique de qualité de référence.

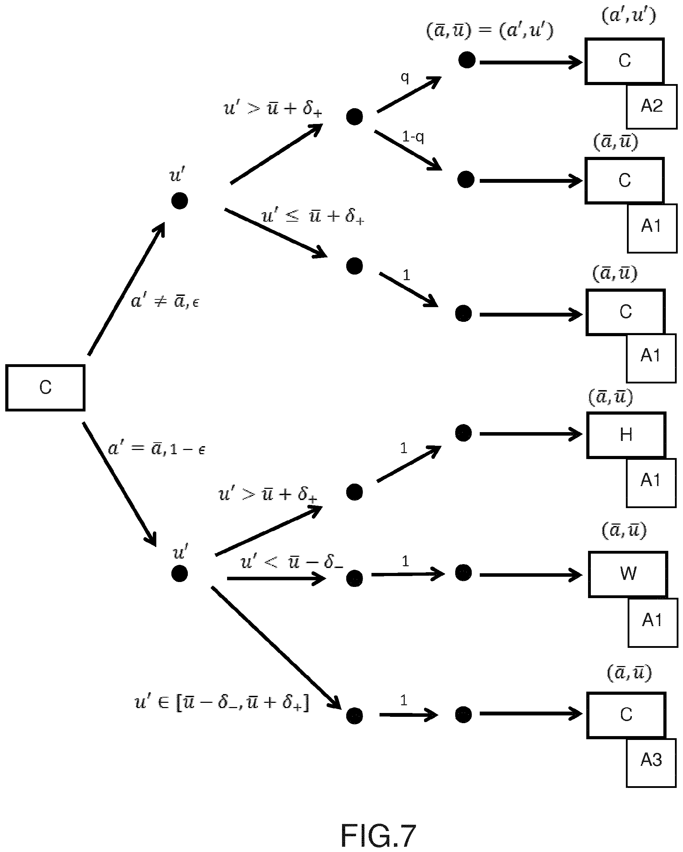

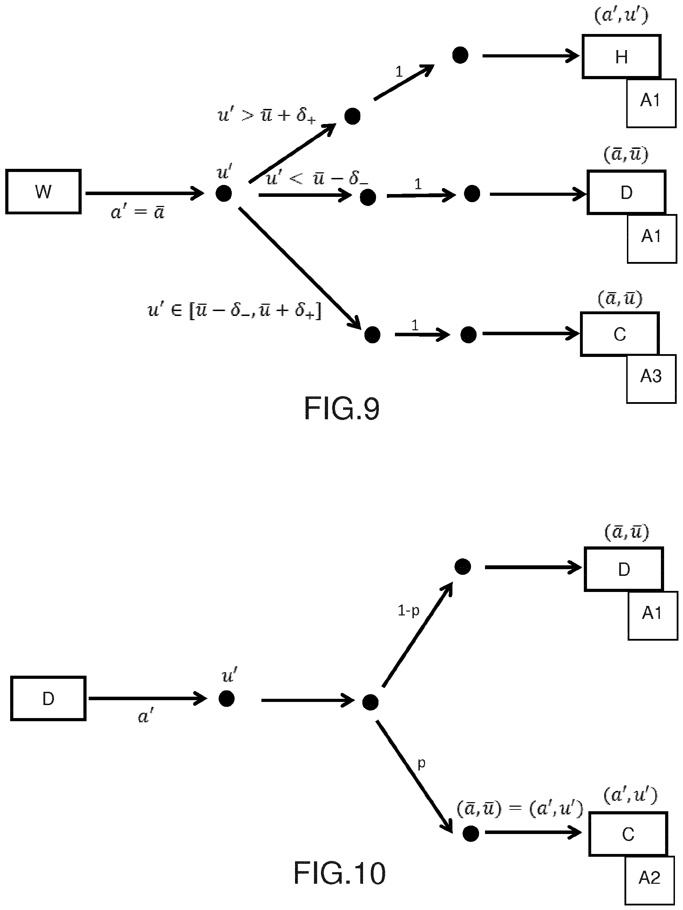

Les figures 7 à 10 représentent les quatre diagrammes des figures 1 à 4 adaptés pour mettre en œuvre la méthode d'allocation de ressources radio selon un premier mode de réalisation de l'invention. Ce premier mode de réalisation correspond à un perfectionnement de la méthode décrite dans le document de référence [1] et présentée aux figures 1 à 4.

Dans les figures 7 à 10, on retrouve les différentes transitions entre états du diagramme d'état telles que déjà présentées aux figures 1 à 4.

Les transitions sont modifiées par l'introduction d'un seuil de tolérance haut $\delta_+$ et d'un seuil de tolérance bas $\delta_-$ pour la comparaison entre la métrique de qualité mesurée u' et la métrique de qualité de référence. Autrement dit, les transitions et actions entreprises lorsque $u' > \bar{u}$ le sont à présent lorsque $u' > \bar{u} + \delta_+$. De même le test $u' < \bar{u}$ est remplacé par $u' < \bar{u} - \delta_-$. Enfin, le test $u' = \bar{u}$ est remplacé par $u' \in [\bar{u} - \delta_-, \bar{u} + \delta_+]$.

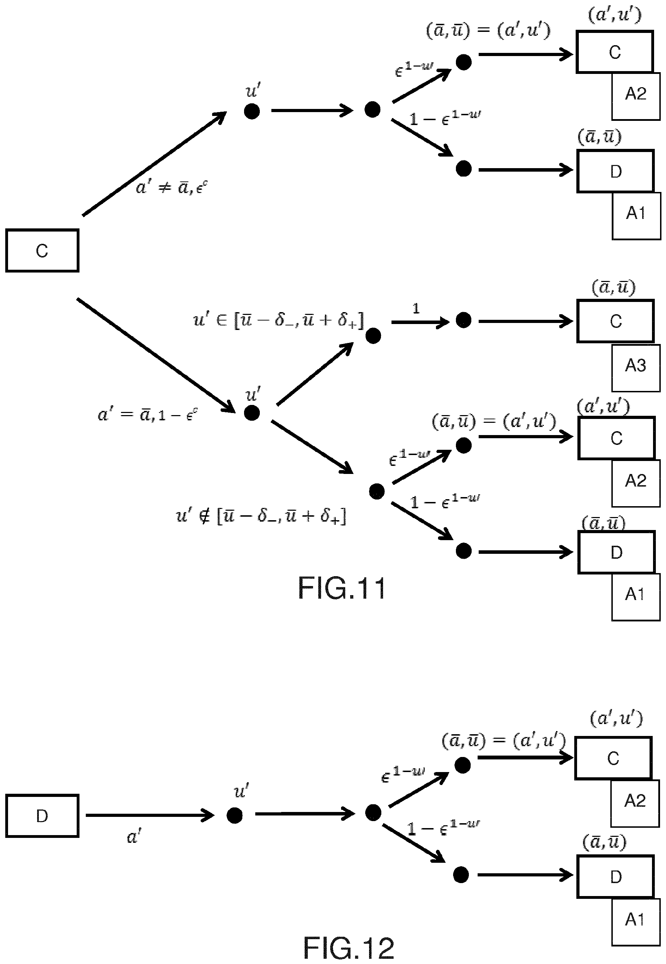

De la même façon, les figures 11 et 12 représentent les deux diagrammes des figures 5 et 6 adaptés pour mettre en œuvre la méthode d'allocation de ressources radio selon un second mode de réalisation de l'invention. Ce second mode de réalisation correspond à un perfectionnement de la méthode décrite dans les documents [2] et [3] et présentée aux figures 5 et 6.

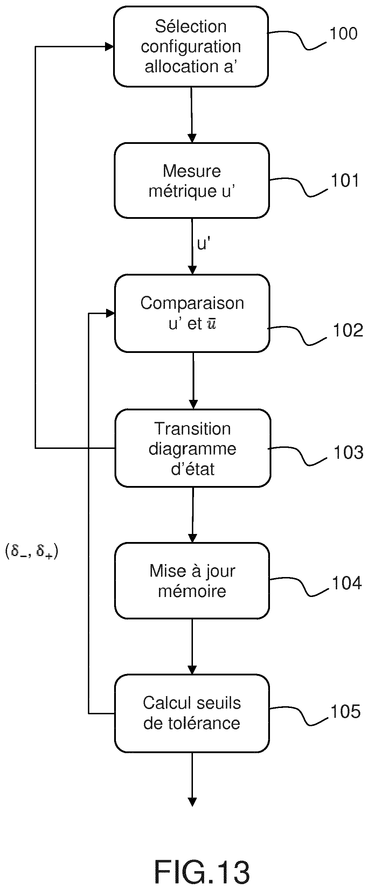

La figure 13 représente un organigramme simplifié des principales étapes de mise en œuvre de la méthode d'allocation de ressources radio selon l'un quelconque des modes de réalisation, la méthode étant exécutée de façon continue par un nœud maitre de chaque groupe du réseau.

Dans une première étape 100, le nœud maitre sélectionne la configuration d'allocation de ressources radio a' à appliquer, qui est soit une nouvelle configuration, soit la configuration de référence.

Dans une deuxième étape 101, le nœud maitre reçoit une nouvelle valeur de métrique de qualité mesurée u'.

Dans une troisième étape 102, une comparaison est réalisée entre la nouvelle métrique u' et la métrique de référence. Pour certaines transitions cependant, l'étape 102 est omise. C'est le cas notamment des transitions depuis l'état non satisfaisant D.

Dans une quatrième étape 103, le nœud maitre effectue une transition dans le diagramme d'état, en fonction du résultat de la comparaison. Cette transition peut être différente selon le mode de réalisation de l'invention. Dans deux modes de réalisation particuliers de l'invention, les transitions sont conformes à celles décrites respectivement aux figures 7 à 10 et 11 à 12. Cependant, les exemples de diagrammes d'état particuliers décrits dans ces deux modes de réalisation peuvent être généralisés à tout diagramme d'état comprenant au moins deux états, comme cela sera explicité plus loin. Les actions préalables aux transitions comprennent au moins une comparaison entre la métrique de qualité mesurée u' et la métrique de qualité de référence, cette comparaison prenant en compte des seuils de tolérance ($\delta_-$, $\delta_+$).

En fonction de la transition effectuée et de l'état d'arrivée, la configuration d'allocation de ressources radio, dite de référence est mise à jour avec la nouvelle configuration d'allocation sélectionnée à l'étape 100 ou non. La valeur de la métrique de qualité de référence $\bar{u}$ est également mise à jour.

Dans une cinquième étape 104, une mémoire n contenant une partie des métriques de qualité mesurées dans le passé est mise à jour en fonction de la transition réalisée et de l'état d'arrivée.

Dans une sixième étape 105, les seuils de tolérance ($\delta_-$, $\delta_+$) sont recalculés à partir de la mémoire n de sorte à être mis à jour pour l'itération suivante du procédé.

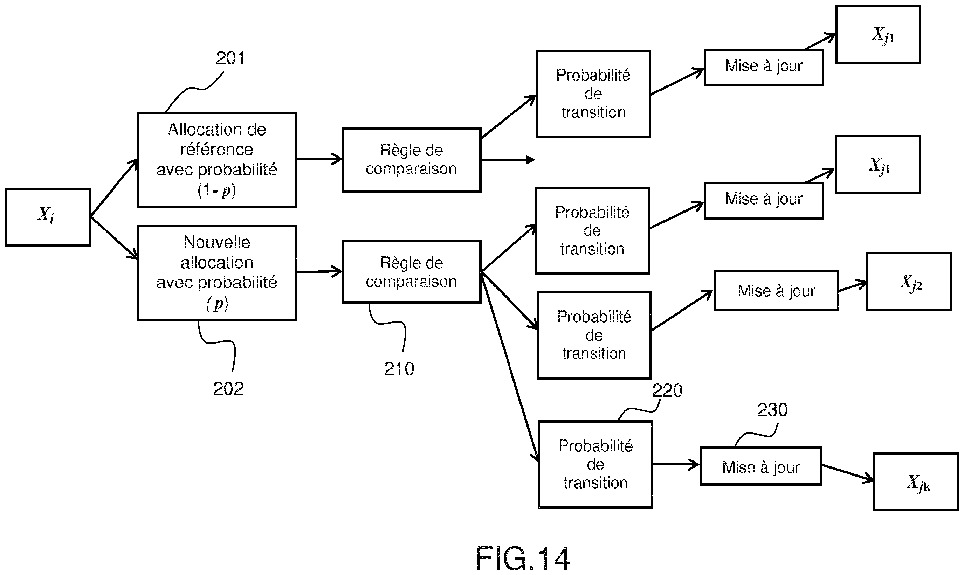

La figure 14 schématise une partie d'un diagramme d'états utilisé pour mettre en œuvre les quatre premières étapes 100-103 du procédé, dans un contexte général.

A partir d'un état de départ $X_i$, le nœud maitre effectue soit une nouvelle allocation de ressources 201 avec une probabilité donnée p, soit il conserve la configuration d'allocation de ressources de référence 202 utilisée précédemment, avec une probabilité complémentaire 1-p.

Ensuite, une comparaison 210 est réalisée entre la métrique de qualité mesurée u' et la métrique de qualité de référence. En fonction du résultat de la comparaison, une transition 220 est réalisée vers un état d'arrivée $X_{j1},X_{j2},...X_{jk}$ avec une probabilité de transition donnée. Si la probabilité de transition est différente de 1, deux transitions vers deux états d'arrivée différents sont possibles. Dans le cas contraire, une seule transition est possible.

En fonction de la transition opérée, une mise à jour 230 de la métrique de qualité de référence et/ou de la configuration d'allocation de ressources de référence est effectuée ou pas.

Les étapes 210,220,230 sont effectuées de façon identique après l'étape 202 et après l'étape 201. La figure 14 ne reprend pas toutes les transitions possibles mais est donnée à titre illustratif pour expliquer le fonctionnement général des transitions.

Le diagramme d'états général présenté à la figure 14 permet de généraliser les deux modes de réalisation particuliers de l'invention décrits respectivement aux figures 7-10 et 11-12. Le nombre de transitions et d'états peut être différent de celui présenté sur la figure 14. Dans le cas le plus général, le nombre d'états est au moins égal à deux.

On décrit à présent plus en détail la cinquième étape 104 du procédé selon l'invention. Cette cinquième étape consiste à mettre à jour une mémoire n contenant une partie des métriques de qualité mesurées dans le passé. La mise à jour de la mémoire comprend trois actions A1,A2,A3 différentes possibles en fonction des transitions du diagramme d'état. Sur les figures 7 à 12, on a indiqué, pour chaque transition, en dessous de l'état final, la référence de l'action à mettre en œuvre pour mettre à jour la mémoire n.

A chaque instant t, une nouvelle métrique de qualité $x_t$ est mesurée. L'état de la mémoire n à l'instant t est noté $n_t$. L'état de la mémoire n à l'instant t+1 est noté $n_{t+1}$.

Une première action A1 possible consiste à ne pas modifier la mémoire à l'instant t+1 par rapport à l'instant t : $n_{t+1}= n_t$.

Une deuxième action A2 possible consiste à rafraichir la mémoire avec la nouvelle métrique de qualité reçue à l'instant t+1 et à oublier les valeurs anciennes contenues dans la mémoire à l'instant t : $n_{t+1}= x_{t+1}$.

Une troisième action A3 possible consiste à ajouter à la mémoire la nouvelle métrique de qualité reçue à l'instant t+1 et à conserver les valeurs anciennes en mémoire : $n_{t+1}= [n_t, x_{t+1}]$.

De manière générale, l'étape 104 du procédé selon l'invention consiste à mettre à jour la mémoire n en utilisant l'une des trois actions A1,A2,A3. La mise à jour de la mémoire s'effectue après une transition du diagramme d'état opérée à l'étape 103. Cette mise à jour s'effectue de la manière suivante selon trois étapes.

Etape 1)

    ◦ Si une nouvelle allocation de ressources 201 est appliquée, on passe directement à l'étape 3)
    ◦ Si l'allocation de ressources de référence 202 est appliquée, on passe directement à l'étape 2)

Etape 2)

    ◦ Si la métrique de qualité mesurée u' est proche de la métrique de qualité de référence, autrement dit si u' appartient à l'intervalle $[\bar{u} - \delta_-, \bar{u} + \delta_+]$, alors la mémoire est mise à jour selon l'action A3,
    ◦ Sinon, on passe directement à l'étape 3)

Etape 3) si il y a mise à jour des valeurs de référence $(\bar{a}, \bar{u})$, alors la mémoire est mise à jour selon l'action A2 sinon la mémoire est mise à jour selon l'action A1.

La mise à jour de la mémoire n selon l'étape 104 du procédé selon l'invention permet de limiter le contenu de la mémoire n à des observations qui peuvent être considérées comme étant stationnaires. Le calcul des seuils de tolérances $\delta_-, \delta_+$ est le résultat d'une estimation (expliquée plus en détail par la suite). Ainsi, Il est possible de réaliser une estimation non biaisée de ces seuils lorsque les valeurs contenues dans la mémoire n sont stationnaires. Par exemple, lorsqu'une mise à jour des valeurs de référence $(\bar{a}, \bar{u})$ est effectuée, les mesures de métrique de qualité reçues par la suite ne peuvent plus être considérées comme stationnaires vis-à-vis des mesures précédemment reçues et contenues dans la mémoire n. En effet, le changement des valeurs de référence traduit un changement de l'état du système du point de vue du groupe. C'est pourquoi dans ce cas, la mémoire n est rafraichie.

On décrit à présent la mise en œuvre de l'étape 105 de calcul des seuils de tolérance à partir de la mémoire n.

Les seuils de tolérance $\delta_-$, $\delta_+$ sont déterminés de manière à ce que les valeurs de la métrique de qualité sauvegardées dans la mémoire n soient en grande partie comprises dans l'intervalle $[\overline{u} - \overline{\delta_-}, \overline{u} + \delta_+]$ autour de la valeur de référence $\overline{u}$ de la métrique de qualité. Ainsi, lors de l'étape de comparaison de la nouvelle métrique mesurée u' avec la métrique de référence $\overline{u}$, un intervalle de tolérance autour de la valeur de $\overline{u}$ est introduit afin d'éviter des fluctuations non désirées de l'algorithme qui seraient dues aux phénomènes aléatoires du canal de transmission.

Lorsque la valeur de référence $\overline{u}$ est fixée pour un groupe, il existe des valeurs $\delta_+^*$ et $\delta_-^*$ telles que si l'état du système reste stationnaire, alors l'intervalle $[\overline{u} - \delta_-^*, \overline{u} + \delta_+^*]$ contient un certain pourcentage $(1 - R_1) \times 100$ des valeurs de la métrique u. Un objectif de l'étape 103 est de faire tendre les seuils de tolérance $\delta_+$ et $\delta_-$ vers les valeurs $\delta_+^*$ et $\delta_-^*$ lorsque la taille de la mémoire n augmente. Si les seuils de tolérance $\delta_+$ et $\delta_-$ sont plus petits que les valeurs $\delta_+^*$ et $\delta_-^*$ alors le système peut être déstabilisé. Par conséquent, la convergence des seuils de tolérance $\delta_+$ et $\delta_-$ doit se faire par valeur supérieure aux valeurs $\delta_+^*$ et $\delta_-^*$ respectivement.

L'étape 105 consiste en premier lieu à déterminer, grâce à la mémoire n, une borne inférieure, notée *L* et une borne supérieure, notée *U*, à la distribution des valeurs des métriques *u* telle que, $R1$ pourcent des valeurs de *u* sont contenues au-dessous de la borne U et au dessus de la borne L et cela avec un risque global plus faible que $R_2$.

Avec ces bornes, les seuils peuvent être calculés directement de la manière suivante: $\delta_+$ = max(0, $U - \overline{u}$) et $\delta_-$ = max(0, $\overline{u}$ - L), où max() désigne la fonction maximum des deux opérandes. La fonction max() est utilisée pour assurer que les deux seuils sont bien toujours supérieurs ou égaux à 0.

Lorsque $\overline{u} \in [L, U]$, on a toujours $\delta_+ + \delta_- = L + U$. Il arrive que $\overline{u}$ ne soit plus situé dans cet intervalle $[L, U]$, par exemple lorsque le niveau de bruit est trop élevé ou lorsque l'état du système a été modifié. Dans ce cas, il existe une mise à jour des seuils après laquelle l'égalité $\delta_+ + \delta_- = L + U$ n'est plus vérifiée et on obtient $\delta_+ + \delta_- > L + U$. Il s'ensuit qu'un des deux seuils est nécessairement nul et, pour retrouver l'égalité $\delta_+ + \delta_- = L + U$, on force alors le seuil non nul à décroitre. Par exemple, imaginons qu'à la suite d'une mise à jour, $\delta_-$ = 0, alors dans ce cas, on forcera $\delta_+ = L + U$. Cette procédure va nécessairement réduire l'intervalle de tolérance autour de $\overline{u}$ qui ne convient pas. Cela a pour conséquence d'amener le groupe à changer de valeur de référence au cours des prochaines itérations de l'algorithme.

Lorsque la mémoire n contient peu de valeurs, les seuils de tolérance doivent avoir une valeur importante qui soit telle que le groupe soit peu sensible aux variations de la valeur de la métrique de qualité. Cela permet tout d'abord d'obtenir des valeurs de seuils de tolérance plus grandes que les valeurs $\delta_+^*$ et $\delta_-^*$ afin de faire converger les seuils par valeurs supérieures. Cela permet de plus, de stabiliser le système pour que les valeurs reçues par chaque groupe soient stationnaires. En considérant les risques $R_1$ et $R_2$ dans les estimateurs, les bornes obtenues seront naturellement très larges lorsque la mémoire est de petite taille.

On décrit à présent plus en détail un exemple de réalisation possible de l'étape 103.

Les seuils de tolérance sont calculés à partir de la mémoire n ainsi que de la valeur de référence $\overline{u}$ à l'instant t courant. La manière de calculer les seuils de tolérance peut dépendre de l'information contenue dans la métrique de qualité mesurée. Nous présentons ici un exemple de réalisation où la métrique de qualité est calculée à partir de valeurs de fonctionnement de chaque lien *i* du groupe. Un lien *i* est considéré comme étant en état de fonctionner si la valeur reçue $l_i$ est égale à 1 et est considéré comme défaillant si $l_i$ est égale à 0. A cause des phénomènes aléatoires présents dans le système, cette valeur de fonctionnement est une variable aléatoire. Plus précisément cette variable suit une loi de Bernoulli de paramètre $p_i$ pour chaque lien *i*. Avec une probabilité $p_i$ le lien fonctionne ($l_i$ = 1), sinon il ne fonctionne pas ($l_i$ = 0). Dans cet exemple, la métrique de qualité mesurée est définie par

$$u = \frac{1}{N_l} \sum_i l_i$$

$N_l$ est le nombre de liens de communication dans un groupe.

Comme la valeur de la métrique de qualité u est la somme de variables aléatoires indépendantes, on peut obtenir sa distribution en effectuant une convolution des distributions des lois de chaque lien i qui dépendent de leur probabilité $p_i$. A partir de la distribution exacte de u, il est possible de calculer directement la valeur des bornes idéales que l'on note L* et U*. Supposons que les valeurs exactes des probabilités $p_i$ sont connues pour chaque lien i. Dans ce cas, il est possible de calculer la distribution exacte, notée pdf, de la variable u. Autrement dit, pour $k \in [1, N_l]$, $\text{pdf}\left(\frac{k}{N_l}\right)$ est

$$P(k) = \sum_{i=1}^{k} \text{pdf}\left(\frac{i}{N_l}\right)$$

la probabilité que k liens soient en état de fonctionner. Dans la suite de ce raisonnement, est la probabilité qu'au moins k liens soient en état de fonctionner. Nous cherchons la valeur de k telle que la probabilité que k liens soient en état de fonctionner est plus petite que $\frac{R_1}{2}$. $L^*$ représente cette valeur. Le calcul formel s'effectue de la manière suivante

$$L^* = \text{argmax}\left\{k \middle| P(k) \leq \frac{R_1}{2}\right\},$$

Autrement dit, la valeur de L* est la valeur la plus grande de k telle que la probabilité d'avoir k liens qui soient en état de fonctionner est plus faible que $\frac{R_1}{2}$.

Concernant l'autre borne $U^*$, on effectue un raisonnement symétrique (à droite de la distribution). Nous cherchons le nombre de liens k tels que la probabilité que plus de k liens soient en état de fonctionner soit plus faible que $\frac{R_1}{2}$. La probabilité complémentaire à $P(k)$ donne

$$1 - P(k) = \sum_{i=k+1}^{N_l} \text{pdf}\left(\frac{i}{N_l}\right)$$

La probabilité 1- P(k) représente la probabilité que k+1 liens ou plus soient en état de fonctionner (voir indice de départ de la somme). Par conséquent, cela sous estime la probabilité que au plus k liens soient en état de fonctionner et peut amener de l'instabilité dans l'algorithme. Pour résoudre cet inconvénient, on utilise simplement la valeur 1 - $P(k$ - 1) et

$$U^* = \text{argmin}\left\{k \middle| 1 - P(k-1) \leq \frac{R_1}{2}\right\}.$$

la formule pour calculer la borne U* devient

Autrement dit la valeur de U* est la valeur minimum de k telle que la probabilité que au plus k liens soient en état de fonctionner, 1 - $P(k$ - 1), soit plus faible que $\frac{R_1}{2}$.

Ensuite, on obtient les seuils de tolérance idéaux en utilisant les relations $\delta_+^* = U^* - \bar{u}$ et $\delta_-^* = \bar{u} - L^*$. En calculant les seuils de tolérance de cette façon, (1 - $R_1$)x100 % des valeurs de u sont comprises dans l'intervalle $[\bar{u} - \delta_-^*, \bar{u} + \delta_+^*]$ avec une probabilité égale à 1.

Un problème est que pour obtenir les valeurs de seuils de tolérance $(\delta_-^*, \delta_+^*)$, il est nécessaire de connaitre les paramètres $p_i$ de chaque lien i. Pour calculer ces paramètres, on utilise la mémoire n qui est de taille finie, par conséquent seul un accès à des valeurs de $p_i$ estimées $\hat{p}_i$ est possible. On en déduit que l'on ne peut pas directement calculer $L^*$ et $U^*$ et donc on ne peut obtenir les valeurs de tolérances $(\delta_-^*, \delta_+^*)$. Seules des valeurs intermédiaires $L$ et $U$ sont accessibles par le calcul et permettront d'obtenir les seuils de tolérance intermédiaires ($\delta_-, \delta_+$). Pour ce faire, la méthode proposée est basée sur une estimation d'un intervalle de confiance autour des paramètres $p_i$. Il est possible avec la mémoire n, de construire un intervalle de confiance noté $C_i = [p_i^-, p_i^+]$ autour de $p_i$ tel que $p_i$ appartient à l'intervalle $C_i$ pendant (1 - $R_2$)x100 pourcent du temps.

On explique par la suite comment utiliser cet intervalle afin de calculer les bornes estimées de $L^*$ et $U^*$ notées L et U après avoir présenté son calcul.

Soient $x^i = \left(x_1^i, \ldots, x_M^i\right)$, M mesures des valeurs de l'état d'un lien $l_i$, nous savons que la variable $y_M^i = \sum_k x_k^i$ suit une loi binomiale, par conséquent :

$$p\left(y_M^i = k \middle| p_i\right) = \binom{M}{k} (p_i)^k (1 - p_i)^{M-k}$$

On utilise ensuite une approche Bayesienne pour trouver la loi a priori sur les valeurs de $p_i$. En utilisant la formule précédente, on déduit que la loi a priori sur $p_i$ est proportionnelle à $(p_i)^k(1-p_i)^{M-k}$. Pour obtenir une loi, on fait en sorte que cette formule soit égale à 1 lorsque l'on intègre sur le support de $p_i$ ([0,1]). Cela donne :

$$p(p_i | y_M^i = k) = \frac{(M + 1)!}{k!\,(M - k)!} (p_i)^k (1 - p_i)^{M-k}$$

Cette formule est l'intégrande de la fonction beta incomplète notée $B_{int}(p_i, k + 1, M - k + 1)$. On peut directement en déduire l'intervalle avec la confiance souhaitée $(1 - R_2)$ de la manière suivante

$$p_i^- = \arg\left\{ p \middle| \int_0^p B_{int}(x, k + 1, M - k + 1)\ dx = \frac{R_2}{2} \right\}$$

Et

$$p_i^+ = \arg\left\{ p \middle| \int_p^1 B_{int}(x, k + 1, M - k + 1)\ dx = \frac{R_2}{2} \right\}$$

Ensuite on explique comment obtenir les valeurs de U et L avec ces approximations sur les valeurs des paramètres $p_i$, c'est-à-dire avec uniquement l'intervalle autour de $p_i$.

Si on considère trois variables aléatoires de Bernoulli $X_1$, $X_2$ et $X_3$ de paramètres $p_i^- < p_i < p_i^+$ respectivement. D'après la définition, la probabilité que $X_1$ soit inférieure à $X_2$ est plus grande que l'inverse, de même la probabilité que $X_2$ soit inférieure à $X_3$ est plus grande que l'inverse. Maintenant, calculons trois valeurs d'utilité, $Z_1$, $Z_2$ et $Z_3$ telles que, pour $Z_1$ on utilise les paramètres $p_i^-$, pour $Z_2$ les paramètres $p_i$ et enfin pour $Z_3$ les paramètres $p_i^+$. On peut réitérer le raisonnement précédent avec les variables $X_j$ à savoir que, par exemple, la probabilité que $Z_1$ soit inférieur à $Z_2$ est plus grande que l'inverse. Si l'on note les distributions pdf_, pdf et pdf_+ de $Z1_l$, $Z_2$ et $Z_3$ alors, par exemple, on sait qu'avec une confiance $1 - \frac{R_2}{2}$ que

$$\forall k \in [1, N_l], P_-(k) \geq P(k)$$

Où selon *pdf_* la probabilité que au moins k liens fonctionnent est

$$P_-(k) = \sum_{i=1}^k pdf_-\left(\frac{k}{N_l}\right)$$

Et que

$$\forall\, k \in [1, N_l],\; 1 - P(k - 1) \leq 1 - P_+(k - 1)$$

Où selon $pdf_+$ la probabilité que au plus k liens fonctionnent est

$$1 - P_+(k - 1) = \sum_{i=k}^{N_l} \mathrm{pdf}_+\left(\frac{k}{N_l}\right).$$

Plus précisément, $P_-(k)$ représente une surestimation, avec une confiance $1 - \frac{R_2}{2}$, de la probabilité d'avoir au moins k liens qui soient en état de fonctionner. De même, $1 - P_+(k - 1)$ représente une surestimation, avec une confiance $1 - \frac{R_2}{2}$, d'avoir plus de k liens qui soient en état de fonctionner. Il est à noter que l'utilisateur n'a accès qu'aux probabilités $P_+$ et $P_-$ et non à la probabilité P. C'est-à-dire que l'on ne peut pas calculer directement $L^*$ et $U^*$. Cependant, on peut adapter les formules utilisées pour calculer $L^*$ et $U^*$ à l'information disponible, $P_-$ et $P_+$, afin obtenir $L$ et $U$. Les formules adaptées sont :

$$L = \mathrm{argmax}\left\{ k \,\middle|\, P_-(k) \leq \frac{R_1}{2} \right\}$$

$$U = \mathrm{argmin}\left\{ k \,\middle|\, 1 - P_+(k - 1) \leq \frac{R_1}{2} \right\}$$

L est la valeur maximum de k telle que la surestimation de probabilité (avec un risque de sous estimation plus faible que $\frac{R_2}{2}$) $P_-(k)$ de $P(k)$ soit plus faible que $\frac{R_1}{2}$.

U est la valeur minimum de k telle que la surestimation de la probabilité (avec un risque de sous estimation plus faible que $\frac{R_2}{2}$) $1 - P_+(k - 1)$ de $1 - P(k - 1)$ qu'au plus k liens fonctionnent soit plus faible que $\frac{R_1}{2}$. Ainsi, avec une confiance égale à $(1 - R_2) \times 100\%$ on a $L \leq L^*$ et $U \geq U^*$. Donc l'ensemble défini par $[L, U]$ couvre au moins $(1 - R_1) \times 100\%$ des valeurs de $u$ avec au plus le risque considéré $R_2$.

$R_1$ représente la portion des valeurs de métrique de qualité que l'on souhaite prendre en compte. $R_2$ représente le risque de se tromper dans le choix des seuils de tolérance. Les seuils calculés $\delta^+$ et $\delta^-$ sont des estimateurs car les bornes L et U sont elles-mêmes des estimateurs. Par conséquent, il existe un risque qu'ils soient faux, et $R_2$ représente ce risque. Par exemple, lorsque l'on calcule la moyenne d'une variable aléatoire (c'est-à-dire la somme des valeurs reçues sur nombre total de valeurs), il y a un risque que l'estimateur soit au-dessus (ou en dessous) de la moyenne statistique. Il est important que ce risque soit maîtrisé afin d'éviter que les seuils soient trop faibles, ce qui peut conduire à une instabilité générale du système car le groupe réagirait alors au bruit en pensant que ce sont des modifications de l'état du système.

Les valeurs de $R_1$ et $R_2$ sont choisies en fonction des paramètres du système.

Par exemple, afin de couvrir une bonne partie des valeurs possibles de u tout en restant sensible aux changements d'actions possibles dans le réseau, $R_1$ peut être choisi tel que $1 - R_1 > 0.95$.

La valeur de $R_2$ est, quant à elle, dépendante de l'estimation utilisée dans le calcul des seuils. Par exemple, dans l'exemple décrit ci-dessus, $R_2$ peut être choisi tel que $1 - R_2 \approx 0.6$. La valeur $1 - R_2$ peut se percevoir comme la confiance dans l'estimateur utilisé. Si $1 - R_2$ est très faible c'est qu'il y a une grande confiance dans la capacité de l'estimateur à trouver le paramètre recherché, en revanche si $1 - R_2$ est très grand alors l'estimation est très préventive vis-à-vis des valeurs reçues. Il faut alors attendre beaucoup d'échantillons avant voir les seuils converger.

L'invention peut être mise en œuvre en tant que programme d'ordinateur comportant des instructions pour son exécution. Le programme d'ordinateur peut être enregistré sur un support d'enregistrement lisible par un processeur. L'invention peut être exécutée totalement ou partiellement par un nœud maitre d'un groupe de nœuds communicants au sein d'un réseau. Un nœud correspond à un dispositif comprenant des moyens pour communiquer avec d'autres nœuds voisins, par exemple par le biais d'une liaison de communication radio.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing*"), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

Alternativement, l'invention peut aussi être mise en œuvre au moyen d'un processeur qui peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Chaque nœud du réseau maillé ainsi que l'équipement externe associé au nœud racine peut utiliser, pour mettre en œuvre l'invention, un ou plusieurs circuits électroniques dédiés ou un circuit à usage général. La technique de l'invention peut se réaliser sur une machine de calcul reprogrammable (un processeur ou un micro contrôleur par exemple) exécutant un programme comprenant une séquence d'instructions, ou sur une machine de calcul dédiée (par exemple un ensemble de portes logiques comme un FPGA ou un ASIC, ou tout autre module matériel).

L'invention s'applique à tout réseau maillé comprenant une pluralité de nœuds qui sont des dispositifs communicants mobiles ou fixes, qui peuvent être localisés, par exemple, dans des véhicules, des téléphones intelligents ou tout type de terminal.

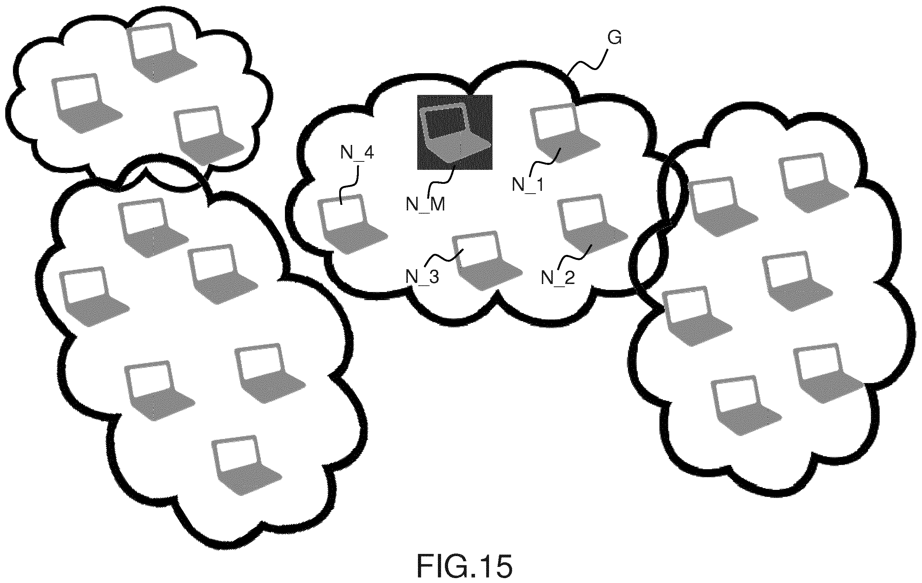

La figure 15 représente schématiquement un réseau ad-hoc comprenant une pluralité de terminaux communicants organisés en groupes. Dans chaque groupe G, au moins un terminal N_M endosse le rôle de nœud maitre et est configuré pour mettre en œuvre le procédé selon l'invention dans le but d'allouer des ressources de communication, par exemple des ressources fréquentielles, à l'ensemble des terminaux N_M, N_1,N_2,N_3,N_4 du groupe G.

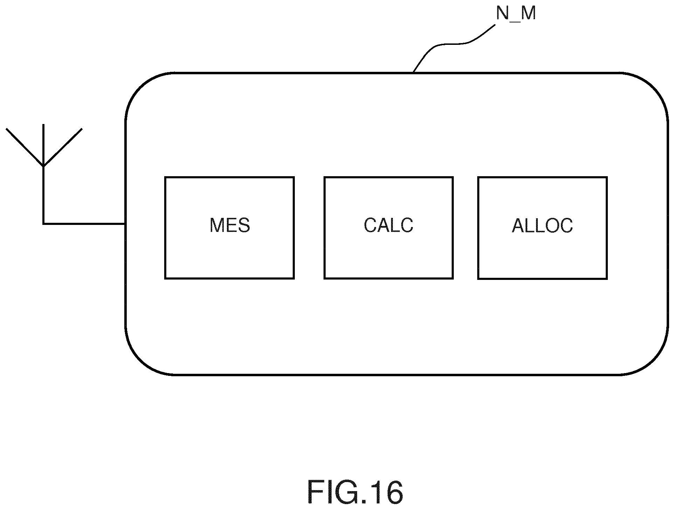

A cet effet, comme illustré sur la figure 16, le terminal N_M comprend les équipements nécessaires à la mise en œuvre de l'invention. Il comprend notamment un dispositif MES pour mesurer, recevoir ou calculer une métrique de qualité des liens de communication entre terminaux du groupe. Par exemple la métrique de qualité peut être calculée à partir d'informations transmises par chaque terminal du groupe G en direction du terminal maitre N_M. Ces informations peuvent comprendre des mesures de rapport signal à bruit sur les liaisons de communication.

Le terminal N_M comprend également un calculateur CALC ou tout dispositif équivalent pour exécuter l'invention et un équipement d'allocation ALLOC de ressources radio qui reçoit à chaque instant la configuration d'allocation de ressources déterminée par le calculateur et la communique à une entité extérieure au réseau en charge du contrôle d'allocation de ressources ou la communique directement aux nœuds du groupe G pour qu'ils utilisent les ressources autorisées selon la configuration déterminée, pour communiquer entre eux.

## Références

[1] L. Rose, S. M. Perlaza, C. J. Le Martret, M. Debbah, "Self-organization in decentralized networks: a trial and error learning approach", IEEE Transactions on Wireless communications, vol 13, no. 1, pp. 268-279, January 2014.
[2] L. Rose, S. M. Perlaza, C. J. Le Martret, and M. Debbah, "Achieving pareto optimal equilibria in energy efficient clustered ad hoc networks," in 2013 IEEE International Conférence on communications (ICC), June 2013, pp. 1491-1495.
[3] C. Ramesh, M. Schmitt, and J. Lygeros, "Distributed learning in the presence of disturbances," in 2016 European Control Conférence (ECC), June 2016, pp. 257-262.

**Revendications**

1. Procédé d'allocation de ressources radio au sein d'un réseau de dispositifs communicants (N_1,N_2,N_3,N-4,N_M) organisés en groupes (G), le procédé comprenant les étapes suivantes exécutées itérativement par au moins un dispositif communiquant (N_M) de chaque groupe (G) :

   - Sélectionner (100) une nouvelle configuration d'allocation de ressources radio a' à appliquer aux dispositifs du groupe, avec une probabilité de sélection donnée, ou appliquer une configuration d'allocation de référence $\bar{a}$, avec une probabilité complémentaire à ladite probabilité de sélection,
   - Mesurer (101) une métrique u' de qualité globale des liens de communication entre dispositifs du groupe (G), ledit procédé étant

   **caractérisé par** les étapes suivantes:

   - Comparer (102) la métrique de qualité mesurée u' avec une métrique de qualité de référence $\bar{u}$, la comparaison incluant la prise en compte d'un intervalle de tolérance $[\bar{u} - \delta_-, \bar{u} + \delta_+]$ autour de la métrique de qualité de référence, l'intervalle de tolérance étant défini par un seuil de tolérance bas $\delta_-$ et un seuil de tolérance haut $\delta_+$,
   - En fonction de ladite comparaison, effectuer (103), au sein d'un diagramme d'états ayant un nombre d'états prédéterminé, une transition depuis un état de départ vers un état d'arrivée,
   - En fonction de l'état d'arrivée, mettre à jour ou non la métrique de qualité de référence $\bar{u}$ avec la métrique de qualité mesurée u' et/ou mettre à jour ou non la configuration d'allocation de référence $\bar{a}$ avec la nouvelle configuration d'allocation a',
   - En fonction de ladite transition et de ladite comparaison, mettre à jour (104) une mémoire contenant au moins une métrique de qualité mesurée de manière à ce que les valeurs contenues dans la mémoire soient stationnaires,
   - Déterminer une borne inférieure et une borne supérieure de la distribution des métriques de qualité de sorte qu'un pourcentage donné de valeurs sont comprises entre la borne inférieure et la borne supérieure,
   - Déterminer (105) le seuil de tolérance haut $\delta_+$ à partir de la borne supérieure et le seuil de tolérance bas $\delta_-$ à partir de la borne inférieure.

2. Procédé d'allocation de ressources radio selon la revendication 1 dans lequel la mise à jour (104) de la mémoire comprend les étapes suivantes :

   - Si une nouvelle configuration d'allocation de ressources radio est sélectionnée,

     • Si la métrique de qualité de référence est mise à jour, réinitialiser la mémoire avec la métrique de qualité mesurée (A2),
     • Sinon, ne pas mettre à jour la mémoire (A1),

   - Si la configuration d'allocation de référence est appliquée,

     • Si la métrique de qualité mesurée est comprise dans l'intervalle de tolérance, ajouter la métrique de qualité mesurée à la mémoire (A3),
     • Sinon,

       ▪ Si la métrique de qualité de référence est mise à jour, réinitialiser la mémoire avec la métrique de qualité mesurée (A2),
       ▪ Sinon, ne pas mettre à jour la mémoire (A1).

3. Procédé d'allocation de ressources radio selon l'une des revendications précédentes dans lequel la métrique de qualité u' d'un groupe est égale au rapport entre un nombre de liens de communication en état de fonctionner dans le groupe et le nombre de liens de communication total dans le groupe.

4. Procédé d'allocation de ressources radio selon l'une des revendications précédentes dans lequel les ressources radio sont des ressources fréquentielles.

5. Procédé d'allocation de ressources radio selon l'une des revendications précédentes dans lequel le diagramme d'états comprend un état satisfaisant (C) et un état non satisfaisant (D).

6.  Procédé d'allocation de ressources radio selon la revendication 5 dans lequel, lorsque l'état de départ est l'état satisfaisant (C) et qu'une nouvelle configuration d'allocation de ressources radio a' est sélectionnée :

    - on effectue une transition vers l'état satisfaisant (C) avec une probabilité de transition dépendante de la métrique de qualité mesurée u' et on met à jour la métrique de qualité de référence $\bar{u}$ avec la métrique de qualité mesurée u' et on met à jour la configuration d'allocation de référence $\bar{a}$ avec la nouvelle configuration d'allocation a',
    - on effectue une transition vers l'état non satisfaisant (D) avec une probabilité complémentaire à ladite probabilité de transition.

7.  Procédé d'allocation de ressources radio selon l'une des revendications 5 ou 6 dans lequel, lorsque l'état de départ est l'état satisfaisant (C) et qu'on applique au groupe la configuration d'allocation de ressources radio de référence $\bar{a}$ :

    - Si la métrique de qualité mesurée u' est comprise dans l'intervalle de tolérance $[\bar{u} - \delta_-, \bar{u} + \delta_+]$ autour de la métrique de qualité de référence $\bar{u}$, on effectue une transition vers l'état satisfaisant (C),
    - Si la métrique de qualité mesurée u' n'est pas comprise dans l'intervalle de tolérance $[\bar{u} - \delta_-, \bar{u} + \delta_+]$ :

        • on effectue une transition vers l'état satisfaisant (C) avec une probabilité de transition dépendante de la métrique de qualité mesurée u' et on met à jour la métrique de qualité de référence $\bar{u}$ avec la métrique de qualité mesurée u',
        • on effectue une transition vers l'état non satisfaisant (D) avec une probabilité complémentaire à ladite probabilité de transition.

8.  Procédé d'allocation de ressources radio selon l'une des revendications 5 à 7 dans lequel, lorsque l'état de départ est l'état non satisfaisant (D), on sélectionne une nouvelle configuration d'allocation de ressources radio a' et :

    - on effectue une transition vers l'état satisfaisant (C) avec une probabilité de transition dépendante de la métrique de qualité mesurée u' et on met à jour la métrique de qualité de référence $\bar{u}$ avec la métrique de qualité mesurée u' et on met à jour la configuration d'allocation de référence $\bar{a}$ avec la nouvelle configuration d'allocation a',
    - on effectue une transition vers l'état non satisfaisant (D) avec une probabilité complémentaire à ladite probabilité de transition.

9.  Procédé d'allocation de ressources radio selon la revendication 5 dans lequel le diagramme d'états comprend en outre au moins un premier état de transition (H) et un second état de transition (W).

10. Procédé d'allocation de ressources radio selon la revendication 9 dans lequel, lorsque l'état de départ est l'état satisfaisant (C) et qu'une nouvelle configuration d'allocation de ressources radio a' est sélectionnée :

    - Si la métrique de qualité mesurée u' est inférieure ou égale à la somme de la métrique de qualité de référence $\bar{u}$ et du seuil de tolérance haut $\delta_+$, on effectue une transition vers l'état satisfaisant (C) sans mettre à jour ni la métrique de qualité de référence $\bar{u}$ ni la configuration d'allocation de référence $\bar{a}$,
    - Si la métrique de qualité mesurée u' est supérieure à la somme de la métrique de qualité de référence $\bar{u}$ et du seuil de tolérance haut $\delta_+$ :

        • on effectue une transition vers l'état satisfaisant (C) avec une probabilité de transition donnée et on met à jour la métrique de qualité de référence $\bar{u}$ avec la métrique de qualité mesurée u' et on met à jour la configuration d'allocation de référence $\bar{a}$ avec la nouvelle configuration d'allocation a',
        • on effectue une transition vers l'état satisfaisant (C) avec une probabilité complémentaire à ladite probabilité de transition sans mettre à jour ni la métrique de qualité de référence $\bar{u}$ ni la configuration d'allocation de référence $\bar{a}$.

11. Procédé d'allocation de ressources radio selon l'une des revendications 9 ou 10 dans lequel, lorsque l'état de départ est l'état satisfaisant (C) et qu'on applique au groupe la configuration d'allocation de ressources radio de référence $\bar{a}$ :

- Si la métrique de qualité mesurée u' est comprise dans l'intervalle de tolérance [$\bar{u} - \delta_-$, $\bar{u} + \delta_+$] autour de la métrique de qualité de référence $\bar{u}$, on effectue une transition vers l'état satisfaisant (C) sans mettre à jour la métrique de qualité de référence $\bar{u}$,

- Si la métrique de qualité mesurée u' est supérieure à la somme de la métrique de qualité de référence $\bar{u}$ et du seuil de tolérance haut $\delta_+$, on effectue une transition vers le premier état de transition (H) sans mettre à jour la métrique de qualité de référence $\bar{u}$,

- Si la métrique de qualité mesurée u' est inférieure à la différence entre la métrique de qualité de référence $\bar{u}$ et le seuil de tolérance bas $\delta_-$, on effectue une transition vers le second état de transition (W) sans mettre à jour la métrique de qualité de référence $\bar{u}$.

12. Procédé d'allocation de ressources radio selon l'une des revendications 9 à 11 dans lequel, lorsque l'état de départ est le premier état de transition (H), on applique la configuration d'allocation de ressources radio de référence $\bar{a}$ et :

- Si la métrique de qualité mesurée u' est comprise dans l'intervalle de tolérance [$\bar{u} - \delta_-$, $\bar{u} + \delta_+$] autour de la métrique de qualité de référence $\bar{u}$, on effectue une transition vers l'état satisfaisant (C) sans mettre à jour la métrique de qualité de référence $\bar{u}$,

- Si la métrique de qualité mesurée u' est supérieure à la somme de la métrique de qualité de référence $\bar{u}$ et du seuil de tolérance haut $\delta_+$, on effectue une transition vers l'état satisfaisant (C) et on met à jour la métrique de qualité de référence $\bar{u}$ avec la métrique de qualité mesurée u',

- Si la métrique de qualité mesurée u' est inférieure à la différence entre la métrique de qualité de référence $\bar{u}$ et le seuil de tolérance bas $\delta_-$, on effectue une transition vers le second état de transition (W) sans mettre à jour la métrique de qualité de référence $\bar{u}$.

13. Procédé d'allocation de ressources radio selon l'une des revendications 9 à 12 dans lequel, lorsque l'état de départ est le second état de transition (W), on applique la configuration d'allocation de ressources radio de référence $\bar{a}$ et :

- Si la métrique de qualité mesurée u' est comprise dans l'intervalle de tolérance [$\bar{u} - \delta_-$, $\bar{u} + \delta_+$] autour de la métrique de qualité de référence $\bar{u}$, on effectue une transition vers l'état satisfaisant (C) sans mettre à jour la métrique de qualité de référence $\bar{u}$,

- Si la métrique de qualité mesurée u' est supérieure à la somme de la métrique de qualité de référence $\bar{u}$ et du seuil de tolérance haut $\delta_+$, on effectue une transition vers le premier état de transition (H) sans mettre à jour la métrique de qualité de référence $\bar{u}$,

- Si la métrique de qualité mesurée u' est inférieure à la différence entre la métrique de qualité de référence $\bar{u}$ et le seuil de tolérance bas $\delta_-$, on effectue une transition vers l'état non satisfaisant (D) sans mettre à jour la métrique de qualité de référence $\bar{u}$.

14. Procédé d'allocation de ressources radio selon l'une des revendications 9 à 13 dans lequel, lorsque l'état de départ est l'état non satisfaisant (D), on sélectionne une nouvelle configuration d'allocation de ressources radio a' et :

- On effectue une transition vers l'état satisfaisant (C) avec une probabilité de transition donnée et on met à jour la métrique de qualité de référence $\bar{u}$ avec la métrique de qualité mesurée u' et on met à jour la configuration d'allocation de référence $\bar{a}$ avec la nouvelle configuration d'allocation a',

- On effectue une transition vers l'état non satisfaisant (D) avec une probabilité complémentaire à ladite probabilité de transition sans mettre à jour la métrique de qualité de référence $\bar{u}$ ni la configuration d'allocation de référence $\bar{a}$.

15. Programme d'ordinateur comportant des instructions pour l'exécution du procédé d'allocation de ressources radio selon l'une quelconque des revendications précédentes, lorsque le programme est exécuté par un processeur.

16. Support d'enregistrement lisible par un processeur sur lequel est enregistré un programme comportant des instructions pour l'exécution du procédé d'allocation de ressources radio selon l'une quelconque des revendications 1 à 14, lorsque le programme est exécuté par un processeur.

17. Dispositif communicant (N_M) apte à communiquer avec une pluralité d'autres dispositifs communicants (N_1,N_2,N_3,N_4) au sein d'un réseau organisé en groupes (G), le dispositif communiquant comprenant des moyens configurés pour mettre en œuvre le procédé d'allocation de ressources radio selon l'une quelconque des revendications 1 à 14.

**Patentansprüche**

1. Verfahren zum Zuweisen von Funkressourcen im Innern eines Netzwerks von kommunizierenden Geräten (N_1, N_2, N_3, N_4, N_M), die in Gruppen (G) organisiert sind, wobei das Verfahren die folgenden Schritte beinhaltet, die iterativ von mindestens einem kommunizierenden Gerät (N_M) jeder Gruppe (G) ausgeführt werden:

   - Auswählen (100) einer neuen Zuweisungskonfiguration für Funkressourcen a' zur Anwendung auf die Geräte der Gruppe, mit einer gegebenen Auswahlwahrscheinlichkeit, oder Anwenden einer Referenzzuweisungskonfiguration $\bar{a}$, mit einer Wahrscheinlichkeit komplementär zu der Auswahlwahrscheinlichkeit,
   - Messen (101) einer Metrik u' von globaler Qualität von Kommunikationsverbindungen zwischen Geräten der Gruppe (G), wobei das Verfahren durch die folgenden Schritte gekennzeichnet ist:

      - Vergleichen (102) der gemessenen Qualitätsmetrik u' mit einer Referenzqualitätsmetrik $\bar{u}$, wobei der Vergleich das Berücksichtigen eines Toleranzintervalls $[\bar{u} - \delta_-, \bar{u} + \delta_+]$ um die Referenzqualitätsmetrik beinhaltet, wobei das Toleranzintervall durch eine tiefe Toleranzschwelle $\delta_-$ und eine hohe Toleranzschwelle $\delta_+$ definiert wird,
      - Bewirken (103) in Abhängigkeit von dem Vergleich, im Innern eines Zustandsdiagramms mit einer vorbestimmten Anzahl von Zuständen, eines Übergangs von einem Anfangszustand in einen Endzustand,
      - Aktualisieren, oder nicht, je nach dem Endzustand, der Referenzqualitätsmetrik $\bar{u}$, mit der gemessenen Qualitätsmetrik u' und/oder Aktualisieren, oder nicht, der Referenzzuweisungskonfiguration $\bar{a}$ mit der neuen Zuweisungskonfiguration a',
      - Aktualisieren (104), in Abhängigkeit von dem Übergang und dem Vergleich, eines Speichers, der mindestens eine gemessene Qualitätsmetrik enthält, auf eine solche Weise, dass die im Speicher enthaltenen Werte stationär sind,
      - Bestimmen eines unteren Anschlusses und eines oberen Anschlusses der Verteilung der Qualitätsmetriken, so dass ein gegebener Prozentanteil von Werten zwischen dem unteren Anschluss und dem oberen Anschluss enthalten ist,
      - Bestimmen (105) der hohen Toleranzschwelle $\delta_+$ auf der Basis des oberen Anschlusses und der tiefen Toleranzschwelle $\delta_-$ auf der Basis des unteren Anschlusses.

2. Verfahren zum Zuweisen von Funkressourcen nach Anspruch 1, in dem die Aktualisierung (104) des Speichers die folgenden Schritte beinhaltet:

   - wenn eine neue Funkressourcen-Zuweisungskonfiguration gewählt wird:

      • wenn die Referenzqualitätsmetrik aktualisiert wird, erneutes Initialisieren des Speichers mit der gemessenen Qualitätsmetrik (A2),
      • andernfalls Nichtaktualisieren des Speichers (A1),

   - wenn die Referenzzuweisungskonfiguration angewendet wird:

      • wenn die gemessene Qualitätsmetrik im Toleranzintervall liegt, Hinzufügen der gemessenen Qualitätsmetrik zum Speicher (A3),
      • andernfalls

         ▪ wenn die Referenzqualitätsmetrik aktualisiert wird, erneutes Initialisieren des Speichers mit der gemessenen Qualitätsmetrik (A2),
         ▪ andernfalls Nichtaktualisieren des Speichers (A1).

3. Verfahren zum Zuweisen von Funkressourcen nach einem der vorherigen Ansprüche, bei dem die Qualitätsmetrik u' einer Gruppe gleich dem Verhältnis zwischen einer Anzahl von Kommunikationsverbindungen im Betriebszustand in der Gruppe und der Gesamtzahl von Kommunikationsverbindungen in der Gruppe ist.

4. Verfahren zum Zuweisen von Funkressourcen nach einem der vorherigen Ansprüche, bei dem die Funkressourcen Frequenzressourcen sind.

**5.** Verfahren zum Zuweisen von Funkressourcen nach einem der vorherigen Ansprüche, bei dem das Zustandsdiagramm einen zufriedenstellenden Zustand (C) und einen nicht zufriedenstellenden Zustand (D) umfasst.

**6.** Verfahren zum Zuweisen von Funkressourcen nach Anspruch 5, bei dem, wenn der Anfangszustand der zufriedenstellende Zustand (C) ist und wenn eine neue Funkressourcen-Zuweisungskonfiguration a' gewählt wird:

- ein Übergang in den zufriedenstellenden Zustand (C) mit einer Übergangswahrscheinlichkeit in Abhängigkeit von der gemessenen Qualitätsmetrik u' und das Aktualisieren der Referenzqualitätsmetrik $\bar{u}$ mit der gemessenen Qualitätsmetrik u' und das Aktualisieren der Referenzzuweisungskonfiguration $\bar{a}$ mit der neuen Zuweisungskonfiguration a' bewirkt wird,
- ein Übergang in den nicht zufriedenstellenden Zustand (D) mit einer Wahrscheinlichkeit komplementär zu der Übergangswahrscheinlichkeit bewirkt wird.

**7.** Verfahren zum Zuweisen von Funkressourcen nach Anspruch 5 oder 6, bei dem, wenn der Anfangszustand der zufriedenstellende Zustand (C) ist und die Referenz-Funkressourcenzuweisungskonfiguration $\bar{a}$ auf die Gruppe angewendet wird:

- wenn die gemessene Qualitätsmetrik u' im Toleranzintervall $[\bar{u} - \delta_-, \bar{u} + \delta_+]$ um die Referenzqualitätsmetrik $\bar{u}$ enthalten ist, ein Übergang in den zufriedenstellenden Zustand (C) bewirkt wird,
- wenn die gemessene Qualitätsmetrik u' nicht im Toleranzintervall $[\bar{u} - \delta_-, \bar{u} + \delta_+]$ enthalten ist:

• ein Übergang in den zufriedenstellenden Zustand (C) mit einer Übergangswahrscheinlichkeit in Abhängigkeit von der gemessenen Qualitätsmetrik u' und das Aktualisieren der Referenzqualitätsmetrik $\bar{u}$ mit der gemessenen Qualitätsmetrik u' bewirkt wird,
• ein Übergang in den nicht zufriedenstellenden Zustand (D) mit einer Wahrscheinlichkeit komplementär zur Übergangswahrscheinlichkeit bewirkt wird.

**8.** Verfahren zum Zuweisen von Funkressourcen nach einem der Ansprüche 5 bis 7, bei dem, wenn der Anfangszustand der nicht zufriedenstellende Zustand (D) ist, eine neue Funkressourcen-Zuweisungskonfiguration a' gewählt wird und:

- ein Übergang in den zufriedenstellenden Zustand (C) mit einer Übergangswahrscheinlichkeit in Abhängigkeit von der gemessenen Qualitätsmetrik u' und das Aktualisieren der Referenzqualitätsmetrik $\bar{u}$ mit der gemessenen Qualitätsmetrik u' und das Aktualisieren der Referenzzuweisungskonfiguration $\bar{a}$ mit der neuen Zuweisungskonfiguration a' bewirkt wird,
- ein Übergang in den nicht zufriedenstellenden Zustand (D) mit einer Wahrscheinlichkeit komplementär zur Übergangswahrscheinlichkeit bewirkt wird.

**9.** Verfahren zum Zuweisen von Funkressourcen nach Anspruch 5, in dem das Zustandsdiagramm ferner mindestens einen ersten Übergangszustand (H) und einen zweiten Übergangszustand (W) umfasst.

**10.** Verfahren zum Zuweisen von Funkressourcen nach Anspruch 9, bei dem, wenn der Anfangszustand der zufriedenstellende Zustand (C) ist und wenn eine neue Funkressourcen-Zuweisungskonfiguration a' gewählt wird:

- wenn die gemessene Qualitätsmetrik u' gleich oder kleiner als die Summe der Referenzqualitätsmetrik $\bar{u}$ und der hohen Toleranzschwelle $\delta_+$ ist, ein Übergang in den zufriedenstellenden Zustand (C) bewirkt wird, ohne die Referenzqualitätsmetrik $\bar{u}$ oder die Referenzzuweisungskonfiguration $\bar{a}$ zu aktualisieren,
- wenn die gemessene Qualitätsmetrik u' größer ist als die Summe der Referenzqualitätsmetrik $\bar{u}$ und der hohen Toleranzschwelle $\delta_+$:

• ein Übergang in den zufriedenstellenden Zustand (C) mit einer gegebenen Übergangswahrscheinlichkeit bewirkt und die Referenzqualitätsmetrik $\bar{u}$ mit der gemessenen Qualitätsmetrik u' aktualisiert und die Referenzzuweisungskonfiguration $\bar{a}$ mit der neuen Zuweisungskonfiguration a' aktualisiert wird,
• ein Übergang in den zufriedenstellenden Zustand (C) mit einer Wahrscheinlichkeit komplementär zur Übergangswahrscheinlichkeit bewirkt wird, ohne die Referenzqualitätsmetrik $\bar{u}$ oder die Referenzzuwei-

sungskonfiguration $\bar{a}$ zu aktualisieren.

**11.** Verfahren zum Zuweisen von Funkressourcen nach einem der Ansprüche 9 oder 10, bei dem, wenn der Anfangszustand der zufriedenstellende Zustand (C) ist und die Referenzfunkressourcen-Zuweisungskonfiguration $\bar{a}$ auf die Gruppe angewendet wird:

- wenn die gemessene Qualitätsmetrik u' im Toleranzintervall $[\bar{u} - \delta_-, \bar{u} + \delta_+]$ um die Referenzqualitätsmetrik $\bar{u}$ liegt, ein Übergang in den zufriedenstellenden Zustand (C) bewirkt wird, ohne die Referenzqualitätsmetrik $\bar{u}$ zu aktualisieren,
- wenn die gemessene Qualitätsmetrik u' größer ist als die Summe der Referenzqualitätsmetrik $\bar{u}$ und der hohen Toleranzschwelle $\delta_+$, ein Übergang in den ersten Übergangszustand (H) bewirkt wird, ohne die Referenzqualitätsmetrik $\bar{u}$ zu aktualisieren,
- wenn die gemessene Qualitätsmetrik u' kleiner ist als die Differenz zwischen der Referenzqualitätsmetrik $\bar{u}$ und der tiefen Toleranzschwelle $\delta_-$, ein Übergang in den zweiten Übergangszustand (W) bewirkt wird, ohne die Referenzqualitätsmetrik $\bar{u}$ zu aktualisieren.

**12.** Verfahren zum Zuweisen von Funkressourcen nach einem der Ansprüche 9 bis 11, bei dem, wenn der Anfangszustand der erste Übergangszustand (H) ist, die ReferenzFunkressourcen-Zuweisungskonfiguration $\bar{a}$ angewendet wird, und:

- wenn die gemessene Qualitätsmetrik u' im Toleranzintervall $[\bar{u} - \delta_-, \bar{u} + \delta_+]$ um die Referenzqualitätsmetrik $\bar{u}$ liegt, ein Übergang in den zufriedenstellenden Zustand (C) bewirkt wird, ohne die Referenzqualitätsmetrik $\bar{u}$ zu aktualisieren,
- wenn die gemessene Qualitätsmetrik u' größer ist als die Summe der Referenzqualitätsmetrik $\bar{u}$ und der hohen Toleranzschwelle $\delta_+$, ein Übergang in den zufriedenstellenden Zustand (C) bewirkt und die Referenzqualitätsmetrik $\bar{u}$ mit der gemessenen Qualitätsmetrik u' aktualisiert wird,
- wenn die gemessene Qualitätsmetrik u' kleiner ist als die Differenz zwischen der Referenzqualitätsmetrik $\bar{u}$ und der tiefen Toleranzschwelle $\delta_-$, ein Übergang in den zweiten Übergangszustand (W) bewirkt wird, ohne die Referenzqualitätsmetrik $\bar{u}$ zu aktualisieren.

**13.** Verfahren zum Zuweisen von Funkressourcen nach einem der Ansprüche 9 bis 12, bei dem, wenn der Anfangszustand der zweite Übergangszustand (W) ist, die ReferenzFunkressourcen-Zuweisungskonfiguration $\bar{a}$ angewendet wird, und:

- wenn die gemessene Qualitätsmetrik u' im Toleranzintervall $[\bar{u} - \delta_-, \bar{u} + \delta_+]$ um die Referenzqualitätsmetrik $\bar{u}$ liegt, ein Übergang in den zufriedenstellenden Zustand (C) bewirkt wird, ohne die Referenzqualitätsmetrik $\bar{u}$ zu aktualisieren,
- wenn die gemessene Qualitätsmetrik u' größer ist als die Summe der Referenzqualitätsmetrik $\bar{u}$ und der hohen Toleranzschwelle $\delta_+$, ein Übergang in den ersten Übergangszustand (H) bewirkt wird, ohne die Referenzqualitätsmetrik $\bar{u}$ zu aktualisieren,
- wenn die gemessene Qualitätsmetrik u' kleiner ist als die Differenz zwischen der Referenzqualitätsmetrik $\bar{u}$ und der tiefen Toleranzschwelle $\delta_-$, ein Übergang in den nicht zufriedenstellenden Zustand (D) bewirkt wird, ohne die Referenzqualitätsmetrik $\bar{u}$ zu aktualisieren.

**14.** Verfahren zum Zuweisen von Funkressourcen nach einem der Ansprüche 9 bis 13, bei dem, wenn der Anfangszustand der nicht zufriedenstellende Zustand (D) ist, eine neue Funkressourcen-Zuweisungskonfiguration a' gewählt wird, und:

- ein Übergang in den zufriedenstellenden Zustand (C) mit einer gegebenen Übergangswahrscheinlichkeit bewirkt und die Referenzqualitätsmetrik $\bar{u}$ mit der gemessenen Qualitätsmetrik u' aktualisiert und die Referenzzuweisungskonfiguration $\bar{a}$ mit der neuen Zuweisungskonfiguration a' aktualisiert wird,
- ein Übergang in den nicht zufriedenstellenden Zustand (D) mit einer Wahrscheinlichkeit komplementär zur Übergangswahrscheinlichkeit bewirkt wird, ohne die Referenzqualitätsmetrik $\bar{u}$ oder die Referenzzuweisungskonfiguration $\bar{a}$ zu aktualisieren.

**15.** Computerprogramm, das Befehle zur Ausführung des Verfahrens zum Zuweisen von Funkressourcen nach einem der vorherigen Ansprüche umfasst, wenn das Programm von einem Prozessor ausgeführt wird.

16. Datenträger, der von einem Prozessor gelesen werden kann und auf dem ein Programm gespeichert ist, das Befehle zur Ausführung des Verfahrens zum Zuweisen von Funkressourcen nach einem der Ansprüche 1 bis 14 umfasst, wenn das Programm von einem Prozessor ausgeführt wird.

17. Kommunizierendes Gerät (N_M), das mit einer Mehrzahl von anderen kommunizierenden Geräten (N_1, N_2, N_3, N_4,) im Innern eines in Gruppen (G) organisierten Netzwerks kommunizieren kann, wobei das kommunizierende Gerät Mittel umfasst, die zum Durchführen des Verfahrens zum Zuweisen von Funkressourcen nach einem der Ansprüche 1 bis 14 konfiguriert sind.

**Claims**

1. Method for allocating radio resources within a network of communicating devices (N_1, N_2, N_3, N_4, N_M) organized into groups (G), the method comprising the following steps executed iteratively by at least one communicating device (N_M) of each group (G):

   - selecting (100) a new radio-resource allocation configuration a' to be applied to the devices of the group, with a given selection probability, or applying a reference allocation configuration $\bar{a}$, with a probability complementary to said selection probability,
   - measuring (101) a metric u' of overall quality of the communication links between devices of the group (G), said method being **characterized by** the following steps:

      - comparing (102) the measured quality metric u' with a reference quality metric $\bar{u}$, the comparison taking into account a tolerance interval $[\bar{u} - \delta_-, \bar{u} + \delta_+]$ about the reference quality metric, the tolerance interval being defined by a low tolerance threshold $\delta_-$ and a high tolerance threshold $\delta_+$,
      - depending on said comparison, making (103), within a state diagram having a preset number of states, a transition from a start state to an end state,
      - depending on the end state, updating or not the reference quality metric $\bar{u}$ with the measured quality metric u' and/or updating or not the reference allocation configuration $\bar{a}$ with the new allocation configuration a',
      - depending on said transition and on said comparison, updating (104) a memory containing at least one measured quality metric so that the values contained in the memory remain stationary,
      - determining a lower limit and an upper limit of the distribution of the quality metrics so that a given percentage of values are comprised between the lower limit and the upper limit,
      - determining (105) the high tolerance threshold $\delta_+$ on the basis of the upper limit and the low tolerance threshold $\delta_-$ on the basis of the lower limit.

2. Method for allocating radio resources according to Claim 1, wherein the update (104) of the memory comprises the following steps:

   - if a new radio-resource allocation configuration is selected,

      • if the reference quality metric is updated, resetting the memory with the measured quality metric (A2),
      • otherwise, not updating the memory (A1),

   - if the reference allocation configuration is applied,

      • If the measured quality metric is comprised in the tolerance interval, adding the measured quality metric to the memory (A3),
      • otherwise,

         ▪ if the reference quality metric is updated, resetting the memory with the measured quality metric (A2),
         ▪ otherwise, not updating the memory (A1).

3. Method for allocating radio resources according to one of the preceding claims, wherein the quality metric u' of a group is equal to the ratio between a number of communication links in a working state in the group and the total number of communication links in the group.

4. Method for allocating radio resources according to one of the preceding claims, wherein the radio resources are frequency resources.

5. Method for allocating radio resources according to one of the preceding claims, wherein the state diagram comprises a satisfactory state (C) and an unsatisfactory state (D).

6. Method for allocating radio resources according to Claim 5, wherein, when the start state is the satisfactory state (C) and a new radio-resource allocation configuration a' is selected:

- a transition is made to the satisfactory state (C) with a transition probability dependent on the measured quality metric u' and the reference quality metric $\bar{u}$ is updated with the measured quality metric u' and the reference allocation configuration $\bar{a}$ is updated with the new allocation configuration a',
- a transition is made to the unsatisfactory state (D) with a probability complementary to said transition probability.

7. Method for allocating radio resources according to either of Claims 5 and 6, wherein, when the start state is the satisfactory state (C) and the reference radio-resource allocation configuration $\bar{a}$ is applied to the group:

- if the measured quality metric u' is comprised in the tolerance interval $[\bar{u} - \delta_-, \bar{u} + \delta_+]$ about the reference quality metric $\bar{u}$, a transition is made to the satisfactory state (C),
- if the measured quality metric u' is not comprised in the tolerance interval $[\bar{u} - \delta_-, \bar{u} + \delta_+]$:

• a transition is made to the satisfactory state (C) with a transition probability dependent on the measured quality metric u' and the reference quality metric $\bar{u}$ is updated with the measured quality metric u',
• a transition is made to the unsatisfactory state (D) with a probability complementary to said transition probability.

8. Method for allocating radio resources according to one of Claims 5 to 7, wherein, when the start state is the unsatisfactory state (D), a new radio-resource allocation configuration a' is selected and:

- a transition is made to the satisfactory state (C) with a transition probability dependent on the measured quality metric u' and the reference quality metric $\bar{u}$ is updated with the measured quality metric u' and the reference allocation configuration $\bar{a}$ is updated with the new allocation configuration a',
- a transition is made to the unsatisfactory state (D) with a probability complementary to said transition probability.

9. Method for allocating radio resources according to Claim 5, wherein the state diagram furthermore comprises at least one first transition state (H) and one second transition state (W).

10. Method for allocating radio resources according to Claim 9, wherein, when the start state is the satisfactory state (C) and a new radio-resource allocation configuration a' is selected:

- if the measured quality metric u' is lower than or equal to the sum of the reference quality metric $\bar{u}$ and of the high tolerance threshold $\delta_+$, a transition is made to the satisfactory state (C) without updating either the reference quality metric $\bar{u}$ or the reference allocation configuration a,
- if the measured quality metric u' is higher than the sum of the reference quality metric $\bar{u}$ and of the high tolerance threshold $\delta_+$:

• a transition is made to the satisfactory state (C) with a given transition probability and the reference quality metric $\bar{u}$ is updated with the measured quality metric u' and the reference allocation configuration $\bar{a}$ is updated with the new allocation configuration a',
• a transition is made to the satisfactory state (C) with a probability complementary to said transition probability without updating either the reference quality metric $\bar{u}$ or the reference allocation configuration $\bar{a}$.

11. Method for allocating radio resources according to either of Claims 9 and 10, wherein, when the start state is the satisfactory state (C) and the reference radio-resource allocation configuration $\bar{a}$ is applied to the group:

- if the measured quality metric u' is comprised in the tolerance interval $[\bar{u} - \delta_-, \bar{u} + \delta_+]$ about the reference quality metric $\bar{u}$, a transition is made to the satisfactory state (C) without updating the reference quality metric $\bar{u}$,
- if the measured quality metric u' is higher than the sum of the reference quality metric $\bar{u}$ and of the high tolerance threshold $\delta_+$, a transition is made to the first transition state (H) without updating the reference quality metric $\bar{u}$,
- if the measured quality metric u' is lower than the difference between the reference quality metric $\bar{u}$ and the low tolerance threshold $\delta_-$, a transition is made to the second transition state (W) without updating the reference quality metric $\bar{u}$.

12. Method for allocating radio resources according to one of Claims 9 to 11, wherein, when the start state is the first transition state (H), the reference radio-resource allocation configuration $\bar{a}$ is applied and:

- if the measured quality metric u' is comprised in the tolerance interval $[\bar{u} - \delta_-, \bar{u} + \delta_+]$ about the reference quality metric $\bar{u}$, a transition is made to the satisfactory state (C) without updating the reference quality metric $\bar{u}$,
- if the measured quality metric u' is higher than the sum of the reference quality metric $\bar{u}$ and of the high tolerance threshold $\delta_+$, a transition is made to the satisfactory state (C) and the reference quality metric $\bar{u}$ is updated with the measured quality metric u',
- if the measured quality metric u' is lower than the difference between the reference quality metric $\bar{u}$ and the low tolerance threshold $\delta_-$, a transition is made to the second transition state (W) without updating the reference quality metric $\bar{u}$.

13. Method for allocating radio resources according to one of Claims 9 to 12, wherein, when the start state is the second transition state (W), the reference radio-resource allocation configuration $\bar{a}$ is applied and:

- if the measured quality metric u' is comprised in the tolerance interval $[\bar{u} - \delta_-, \bar{u} + \delta_+]$ about the reference quality metric $\bar{u}$, a transition is made to the satisfactory state (C) without updating the reference quality metric $\bar{u}$,
- if the measured quality metric u' is higher than the sum of the reference quality metric $\bar{u}$ and of the high tolerance threshold $\delta_+$, a transition is made to the first transition state (H) without updating the reference quality metric $\bar{u}$,
- if the measured quality metric u' is lower than the difference between the reference quality metric $\bar{u}$ and the low tolerance threshold $\delta_-$, a transition is made to the unsatisfactory state (D) without updating the reference quality metric $\bar{u}$.

14. Method for allocating radio resources according to one of Claims 9 to 13, wherein, when the start state is the unsatisfactory state (D), a new radio-resource allocation configuration a' is selected and:

- a transition is made to the satisfactory state (C) with a given transition probability and the reference quality metric $\bar{u}$ is updated with the measured quality metric u' and the reference allocation configuration $\bar{a}$ is updated with the new allocation configuration a',
- a transition is made to the unsatisfactory state (D) with a probability complementary to said transition probability without updating the reference quality metric $\bar{u}$ or the reference allocation configuration $\bar{a}$.

15. Computer program including instructions for executing the method for allocating radio resources according to any one of the preceding claims, when the program is executed by a processor.

16. Storage medium that is readable by a processor, on which is stored a program including instructions for executing the method for allocating radio resources according to any one of Claims 1 to 14, when the program is executed by a processor.

17. Communicating device (N_M) able to communicate with a plurality of other communicating devices (N_1, N_2, N_3, N_4) within a network organized into groups (G), the communicating device comprising means configured to implement the method for allocating radio resources according to any one of Claims 1 to 14.

FIG.1

FIG.2

FIG.3

FIG.4

FIG.5

FIG.6

FIG.8

$(\bar{a}, \bar{u}) = (a', u')$

$(a', u')$

$u' > \bar{u} + \delta_+$

q

C

A2

1-q

$(\bar{a}, \bar{u})$

C

A1

$u' \leq \bar{u} + \delta_+$

1

$(\bar{a}, \bar{u})$

C

A1

$u'$

$a' \neq \bar{a}, \epsilon$

C

$a' = \bar{a}, 1 - \epsilon$

1

$(\bar{a}, \bar{u})$

H

A1

$u' > \bar{u} + \delta_+$

$u' < \bar{u} - \delta_-$

1

$(\bar{a}, \bar{u})$

W

A1

$u'$

$u' \in [\bar{u} - \delta_-, \bar{u} + \delta_+]$

1

$(\bar{a}, \bar{u})$

C

A3

FIG.7

$(a', u')$

$u' > \bar{u} + \delta_+$

$\boxed{\text{W}}$ $\xrightarrow{a' = \bar{a}}$ $u'$ $\quad u' < \bar{u} - \delta_-$

$u' \in [\bar{u} - \delta_-, \bar{u} + \delta_+]$

1 — H
A1

$(\bar{a}, \bar{u})$

1 — D
A1

$(\bar{a}, \bar{u})$

1 — C
A3

FIG.9

$(\bar{a}, \bar{u})$

1-p — D
A1

$\boxed{\text{D}}$ $\xrightarrow{a'}$ $u'$ p

$(a', u')$

$(\bar{a}, \bar{u}) = (a', u')$ — C
A2

FIG.10

$(\bar{a}, \bar{u}) = (a', u')$

$(a', u')$

$\epsilon^{1-u'}$

C

A2

$1 - \epsilon^{1-u'}$

$(\bar{a}, \bar{u})$

D

A1

$u'$

$a' \neq \bar{a}, \epsilon^c$

C

$u' \in [\bar{u} - \delta_-, \bar{u} + \delta_+]$

1

$(\bar{a}, \bar{u})$

C

A3

$u'$

$a' = \bar{a}, 1 - \epsilon^c$

$(\bar{a}, \bar{u}) = (a', u')$

$(a', u')$

$\epsilon^{1-u'}$

C

A2

$1 - \epsilon^{1-u'}$

$(\bar{a}, \bar{u})$

D

$u' \notin [\bar{u} - \delta_-, \bar{u} + \delta_+]$

A1

# FIG.11

$(a', u')$

$(\bar{a}, \bar{u}) = (a', u')$

$\epsilon^{1-u'}$

C

A2

$1 - \epsilon^{1-u'}$

$(\bar{a}, \bar{u})$

D

D

$u'$

$a'$

A1

# FIG.12

30

FIG.13

$X_i$

201

Allocation de référence avec probabilité $(1- p)$

202

Nouvelle allocation avec probabilité $(p)$

Règle de comparaison

210

Règle de comparaison

Probabilité de transition

Mise à jour

$X_{j1}$

Probabilité de transition

Mise à jour

$X_{j1}$

Probabilité de transition

Mise à jour

$X_{j2}$

220

230

Probabilité de transition

Mise à jour

$X_{jk}$

FIG.14

FIG.15

FIG.16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **L. ROSE ; S. M. PERLAZA ; C. J. LE MARTRET ; M. DEBBAH.** Self-organization in decentralized networks: a trial and error learning approach. *IEEE Transactions on Wireless communications,* Janvier 2014, vol. 13 (1), 268-279

- **L. ROSE ; S. M. PERLAZA ; C. J. LE MARTRET ; M. DEBBAH.** Achieving pareto optimal equilibria in energy efficient clustered ad hoc networks. *2013 IEEE International Conférence on communications (ICC),* Juin 2013, 1491-1495
- **C. RAMESH ; M. SCHMITT ; J. LYGEROS.** Distributed learning in the presence of disturbances. *2016 European Control Conférence (ECC),* Juin 2016, 257-262